# EUROPEAN PATENT APPLICATION

(11) **EP 4 092 786 A1**
(43) Date of publication of application: **23.11.2022**
(21) Application number: 20913444.4
(22) Date of filing: 23.12.2020
(51) Int. Cl.: H01M 4/525, H01M 4/131, H01M 4/505, H01M 4/62, H01M 10/052, H01M 10/0562, H01M 10/0585

(54) **POSITIVE-ELECTRODE ACTIVE MATERIAL FOR ALL-SOLID-STATE LITHIUM-ION CELL, ELECTRODE, AND ALL-SOLID-STATE LITHIUM-ION CELL**

(30) Priority: 17.01.2020 JP 2020006339
(71) Applicant: SUMITOMO CHEMICAL COMPANY, LIMITED, Tokyo 103-6020 (JP)
(72) Inventor: KADOWAKI, Takuya, Niihama-shi, Ehime 792-8521 (JP); KAGEURA, Jun-ichi, Niihama-shi, Ehime 792-8521 (JP); MURAKAMI, Chikara, Niihama-shi, Ehime 792-8521 (JP)
(74) Representative: Vossius & Partner Patentanwälte Rechtsanwälte mbB
(86) International application number: PCT/JP2020/048240
(87) International publication number: WO 2021/145179

(57) **Abstract**

What is provided is a positive electrode active material for an all-solid-state lithium-ion battery composed of particles containing crystals of a lithium metal composite oxide, wherein the particles have a hexagonal layered crystal structure belonging to the space group R-3m and contain at least Li and a transition metal, and in powder x-ray diffraction measurement using CuKa rays, the crystallite size L₀₀₃ of a diffraction peak in a range of 2θ=18.7±1° is 1,300Å or less, and wherein the BET specific surface area is 0.2 m²/g or more and 2.0 m²/g or less.

## Description

### [Technical Field]

The present invention relates to a positive electrode active material for an all-solid-state lithium-ion battery, an electrode and an all-solid-state lithium-ion battery.

Priority is claimed on Japanese Patent Application No. 2020-006339, filed January 17, 2020, the content of which is incorporated herein by reference.

### [Background Art]

Research on lithium-ion secondary batteries is active for applications such as drive power supplies of electric vehicles and household storage batteries. Among these, the all-solid-state lithium-ion secondary battery has advantages such as a high energy density, a wide operation temperature range, and resistance to deterioration, as compared with a conventional lithium-ion secondary battery using an electrolytic solution. Therefore, the all-solid-state lithium-ion secondary battery is being focused on as a next-generation energy storage device.

In the following description, the "conventional lithium-ion secondary battery using an electrolytic solution" may be referred to as a "liquid-based lithium-ion secondary battery" in order to distinguish it from an all-solid-state lithium-ion secondary battery.

Patent Document 1 describes an all-solid-state lithium-ion secondary battery using LiNi_{1/3}Mn_{1/3}Co_{1/3}O₂ as a positive electrode active material. LiNi_{1/3}Mn_{1/3}Co_{1/3}O₂ is a well-known material as a positive electrode active material for a liquid-based lithium-ion secondary battery.

### [Citation List]

### [Patent Literature]

[Patent Document 1]
JP-A-2018-014317

### [Summary of Invention]

### [Technical Problem]

In a positive electrode of an all-solid-state lithium-ion secondary battery, lithium ions are exchanged between a positive electrode active material and a solid electrolyte. In the study of all-solid-state lithium-ion secondary batteries, there has been a demand for a positive electrode active material that can smoothly exchange the above lithium ions and can improve battery performance such as a discharging capacity.

In addition, in the study of all-solid-state lithium-ion secondary batteries, the findings of studies on conventional liquid-based lithium-ion secondary batteries may not be utilized. Therefore, there is a need for specific studies on all-solid-state lithium-ion secondary batteries.

The present invention has been made in view of such circumstances, and an object of the present invention is to provide a positive electrode active material for an all-solid-state lithium-ion battery that can improve an initial discharging capacity. In addition, another object of the present invention is to provide an electrode containing such a positive electrode active material for an all-solid-state lithium-ion battery and an all-solid-state lithium-ion battery.

A charging and discharging test is performed under predetermined conditions, and the discharging capacity in the first cycle is defined as the initial discharging capacity. When the value of the initial discharging capacity is large, the volume and the capacity per weight tend to be relatively large.

### [Solution to Problem]

In order to address the above problems, the present invention includes the following aspects.
[1] A positive electrode active material for an all-solid-state lithium-ion battery composed of particles containing crystals of a lithium metal composite oxide,
   wherein the particles have a hexagonal layered crystal structure belonging to the space group R-3m and contain at least Li and a transition metal, and in powder x-ray diffraction measurement using CuKa rays, the crystallite size L₀₀₃ of a diffraction peak in a range of 2θ=18.7±1° is 1,300Å or less, and
   wherein the BET specific surface area is 0.2 m²/g or more and 2.0 m²/g or less.
[2] The positive electrode active material for an all-solid-state lithium-ion battery according to [1], which is used for an all-solid-state lithium-ion battery containing an oxide-based solid electrolyte.
[3] The positive electrode active material for an all-solid-state lithium-ion battery according to [1] or [2],
   wherein the sum of mass fractions of K atoms, Fe atoms, Cr atoms, Cu atoms, Ca atoms, Mg atoms, and Na atoms with respect to a total mass of the positive electrode active material for an all-solid-state lithium-ion battery is 0.03% or more and 1.0% or less.
[4] The positive electrode active material for an all-solid-state lithium-ion battery according to any one of [1] to [3],
   wherein, in the particles, in the powder x-ray diffraction measurement, a ratio L₀₀₃/L₁₀₄ of L₀₀₃ to a crystallite size L₁₀₄ of a diffraction peak in a range of 2θ=44.6±1° is 0.70 or more and 3.00 or less.
[5] The positive electrode active material for an all-solid-state lithium-ion battery according to any one of [1] to [4],
   wherein, in the particles, in the powder x-ray diffraction measurement, a ratio L₀₀₃/L₁₁₀ of L₀₀₃ to a crystallite size L₁₁₀ of a diffraction peak in a range of 2θ=64.5±1° is 0.65 or more and 3.00 or less.
[6] The positive electrode active material for an all-solid-state lithium-ion battery according to any one of [1] to [5],
   wherein the transition metal is at least one element selected from the group consisting of Ni, Co, Mn, Ti, V and W.
[7] The positive electrode active material for an all-solid-state lithium-ion battery according to [6],
   wherein the lithium metal composite oxide is represented by the following Composition Formula (A):

   Li[Liₓ(Ni(_{1-y-z-w})Co_{y}Mn_{z}M_{w})₁₋ₓ]O₂ Composition Formula (A)

   (where, M is at least one element selected from the group consisting of Ti, Al, W, B, Mo, Nb, Zn, Sn, Zr, Ga and V, and -0.10≤x≤0.30, 0≤y≤0.40, 0≤z≤0.40, and 0≤w≤0.10 are satisfied).
[8] The positive electrode active material for an all-solid-state lithium-ion battery according to [7],
   wherein, in Composition Formula (A), y>0 and z+w>0 are satisfied.
[9] The positive electrode active material for an all-solid-state lithium-ion battery according to [7] or [8],
   wherein, in Composition Formula (A), 1-y-z-w≥0.50 and y≤0.30 are satisfied.
[10] The positive electrode active material for an all-solid-state lithium-ion battery according to any one of [1] to [9],
   wherein the particles are composed of primary particles, secondary particles which are aggregates of the primary particles, and single particles that exist independently of the primary particles and the secondary particles, and
   wherein the amount of the single particles in the particles is 20% or more.
[11] An electrode including the positive electrode active material for an all-solid-state lithium-ion battery according to any one of [1] to [10].
[12] The electrode according to [11], further including a solid electrolyte.
[13] An all-solid-state lithium-ion battery including a positive electrode, a negative electrode, and a solid electrolyte layer interposed between the positive electrode and the negative electrode,
   wherein the solid electrolyte layer contains a first solid electrolyte,
   wherein the positive electrode has a positive electrode active material layer in contact with the solid electrolyte layer and a current collector on which the positive electrode active material layer is laminated, and
   wherein the positive electrode active material layer contains the positive electrode active material for an all-solid-state lithium-ion battery according to any one of [1] to [10].
[14] The all-solid-state lithium-ion battery according to [13],
   wherein the positive electrode active material layer contains the positive electrode active material for an all-solid-state lithium-ion battery and a second solid electrolyte.
[15] The all-solid-state lithium-ion battery according to [14],
   wherein the first solid electrolyte and the second solid electrolyte are the same substance.
[16] The all-solid-state lithium-ion battery according to any one of [13] to [15],
   wherein the first solid electrolyte has an amorphous structure.
[17] The all-solid-state lithium-ion battery according to any one of [13] to [16],
   wherein the first solid electrolyte is an oxide-based solid electrolyte.

### [Advantageous Effects of Invention]

According to the present invention, it is possible to provide a positive electrode active material for an all-solid-state lithium-ion battery that can improve an initial discharging capacity. In addition, it is possible to provide an electrode containing such a positive electrode active material for an all-solid-state lithium-ion battery and an all-solid-state lithium-ion battery.

### [Brief Description of Drawings]

Fig. 1 is a schematic view showing a laminate included in an all-solid-state lithium-ion battery of an embodiment.
Fig. 2 is a schematic view showing an overall structure of the all-solid-state lithium-ion battery of the embodiment.

### [Description of Embodiments]

### <Positive electrode active material for all-solid-state lithium-ion battery>

When the surface of lithium metal composite oxide particles has a coating layer composed of a metal composite oxide to be described below, particles having a coating layer correspond to "particles containing crystals of a lithium metal composite oxide" according to one aspect of the present invention.

In addition, when the surface of lithium metal composite oxide particles does not have a coating layer composed of a metal composite oxide, the lithium metal composite oxide corresponds to "particles containing crystals of a lithium metal composite oxide" according to one aspect of the present invention.

A positive electrode active material for an all-solid-state lithium-ion battery is composed of particles containing crystals of a lithium metal composite oxide. The positive electrode active material for an all-solid-state lithium-ion battery of the present embodiment is a positive electrode active material suitably used for an all-solid-state lithium-ion battery containing an oxide-based solid electrolyte.

Hereinafter, the positive electrode active material for an all-solid-state lithium-ion battery of the present embodiment may be simply referred to as a "positive electrode active material."

The positive electrode active material satisfies the following requirements.
(Requirement 1) The particles contained in the positive electrode active material have a hexagonal layered crystal structure belonging to the space group R-3m and contain at least Li and a transition metal. Here, in this specification, the transition metal refers to a transition metal element.
(Requirement 2) In the particles contained in the positive electrode active material, in powder x-ray diffraction measurement using CuKa rays, the crystallite size L₀₀₃ of a diffraction peak in a range of 2θ=18.7±1° is 1,300Å or less.
(Requirement 3) The positive electrode active material has a BET specific surface area of 0.2 m²/g or more and 2.0 m²/g or less.

The requirements will be described below in order.

### (Requirement 1)

The particles have a hexagonal layered crystal structure belonging to the space group R-3m and contain at least Li and a transition metal. Examples of transition metals include at least one selected from the group consisting of Ni, Co, Mn, Ti, V and W.

In this specification, Ni indicates a nickel atom rather than a nickel metal, and similarly, metal species such as Co and Li indicate metal atoms such as a cobalt atom and a lithium atom.

When the particles contain at least one element selected from the group consisting of Ni, Co and Mn as a transition metal, the obtained positive electrode active material forms a stable crystal structure in which Li ions can be desorbed and inserted. Therefore, when the positive electrode active material is used for a positive electrode of an all-solid-state lithium-ion battery, a high charging capacity and a high initial discharging capacity can be obtained.

In addition, when the particles contain at least one selected from the group consisting of Ti, Fe, V and W, the obtained positive electrode active material has a strong crystal structure. Therefore, the positive electrode active material has high thermal stability. In addition, such a positive electrode active material can improve the cycle characteristics of the all-solid-state lithium-ion battery.

The lithium metal composite oxide contained in the positive electrode active material preferably contains at least Li and Ni, and at least one element selected from the group consisting of Co, Mn, Ti, Al, W, B, Mo, Nb, Zn, Sn, Zr, Ga and V, and is preferably represented by the following Composition Formula (A).

Li[Liₓ(Ni_{(1-y-z-w)}Co_{y}Mn_{z}M_{w})₁₋ₓ]O₂ ··· (A)

(where, M is at least one element selected from the group consisting of Ti, Al, W, B, Mo, Nb, Zn, Sn, Zr, Ga and V, and -0.10≤x≤0.30, 0≤y≤0.40, 0≤z≤0.40, and 0≤w≤0.10 are satisfied).

### (Regarding x)

In order to obtain an all-solid-state lithium-ion battery having a favorable cycle characteristic, x is preferably more than 0, more preferably 0.01 or more, and still more preferably 0.02 or more. In addition, in order to obtain an all-solid-state lithium-ion battery having a high initial Coulomb efficiency, x is preferably 0.25 or less, and more preferably 0.10 or less.

Here, in this specification, a "favorable cycle characteristic" means a characteristic by which the amount of a battery capacity decreases due to repeated charging and discharging is small, and means that the ratio of the capacity during re-measurement to the initial capacity is unlikely to decrease.

In addition, in this specification, the "initial Coulomb efficiency" is a value obtained by "(initial discharging capacity)/(initial charging capacity)×100(%)." An all-solid-state lithium-ion battery having a high initial Coulomb efficiency has a small irreversible capacity during initial charging and during discharging, and tends to have a relatively large volume and capacity per weight.

The upper limit values and the lower limit values of x can be arbitrarily combined. x may be -0.10 or more and 0.25 or less, and may be -0.10 or more and 0.10 or less.
x may preferably be more than 0 and 0.30 or less, may be more preferably than 0 and 0.25 or less, and may be even more preferably than 0 and 0.10 or less.
x may preferably be 0.01 or more and 0.30 or less, may more preferably be 0.01 or more and 0.25 or less, and may even more preferably be 0.01 or more and 0.10 or less.
x may preferably be 0.02 or more and 0.3 or less, may more preferably be 0.02 or more and 0.25 or less, and may even more preferably be 0.02 or more and 0.10 or less.

It is preferable that x satisfy 0<x≤0.30.

### (Regarding y)

In order to obtain an all-solid-state lithium-ion battery having a low battery internal resistance, y is preferably more than 0, more preferably 0.005 or more, still more preferably 0.01 or more, and particularly preferably 0.05 or more. In addition, in order to obtain an all-solid-state lithium-ion battery having high thermal stability, y is more preferably 0.35 or less, still more preferably 0.33 or less, and yet more preferably 0.30 or less.

The upper limit values and the lower limit values of y can be arbitrarily combined. y may be 0 or more and 0.35 or less, may preferably be 0 or more and 0.33 or less, and may more preferably be 0 or more and 0.30 or less.
y may be more than 0 and 0.40 or less, may preferably be more than 0 and 0.35 or less, may more preferably be more than 0 and 0.33 or less, and may even more preferably be more than 0 and 0.30 or less.
y may be 0.005 or more and 0.40 or less, may preferably be 0.005 or more and 0.35 or less, may more preferably be 0.005 or more and 0.33 or less, and may even more preferably be 0.005 or more and 0.30 or less.
Y may be 0.01 or more and 0.40 or less, may preferably be 0.01 or more and 0.35 or less, may more preferably be 0.01 or more and 0.33 or less, and may even more preferably be 0.01 or more and 0.30 or less.
y may be 0.05 or more and 0.40 or less, may preferably be 0.05 or more and 0.35 or less, may more preferably be 0.05 or more and 0.33 or less, and may even more preferably be 0.05 or more and 0.30 or less.
It is preferable that y satisfy 0≤y≤0.40, and more preferable that y satisfy 0<y≤0.30.
In Composition Formula (A), 0<x≤0.10 and 0<y≤0.40 are more preferable, and 0<x≤0.10 and 0<y≤0.30 are still more preferable.

### (Regarding z)

In order to obtain an all-solid-state lithium-ion battery having excellent cycle characteristics, z is preferably more than 0, and z is more preferably 0.01 or more, still more preferably 0.02 or more, and particularly preferably 0.10 or more. In addition, in order to obtain an all-solid-state lithium-ion battery having high storability at a high temperature (for example, in an environment at 60°C), z is preferably 0.39 or less, more preferably 0.38 or less, and still more preferably 0.35 or less.

The upper limit values and the lower limit values of z can be arbitrarily combined. z may be 0 or more and 0.39 or less, may preferably be 0 or more and 0.38 or less, may more preferably be 0 or more and 0.35 or less, and may even more preferably be more than 0 and 0.39 or less.
z may be 0.01 or more and 0.40 or less, may preferably be 0.01 or more and 0.39 or less, may more preferably be 0.01 or more and 0.38 or less, and may even more preferably be 0.01 or more and 0.35 or less.
z may be 0.02 or more and 0.40 or less, may preferably be 0.02 or more and 0.39 or less, may more preferably be 0.02 or more and 0.38 or less, and may even more preferably be 0.02 or more and 0.35 or less.
z may be 0.10 or more and 0.40 or less, may preferably be 0.10 or more and 0.39 or less, may more preferably be 0.10 or more and 0.38 or less, and may even more preferably be 0.10 or more and 0.35 or less.

It is preferable that z satisfy 0.02≤z≤0.35.

In Composition Formula (A), it is preferable that y>0 and z+w>0 be satisfied.

### (Regarding w)

In order to obtain an all-solid-state lithium-ion battery having a low battery internal resistance, w is preferably more than 0, more preferably 0.0005 or more, and still more preferably 0.001 or more. In addition, in order to obtain an all-solid-state lithium-ion battery having a large initial discharging capacity at a high current rate, w is preferably 0.09 or less, more preferably 0.08 or less, and still more preferably 0.07 or less.

The upper limit values and the lower limit values of w can be arbitrarily combined. w may be 0 or more and 0.09 or less, may preferably be 0 or more and 0.08 or less, and may even more preferably be 0 or more and 0.07 or less.
w may be more than 0 and 0.10 or less, may preferably be more than 0 and 0.09 or less, may more preferably be more than 0 and 0.08 or less, and may even more preferably be more than 0 and 0.07 or less.
w may be 0.0005 or more and 0.10 or less, may preferably be 0.0005 or more and 0.09 or less, may more preferably be 0.0005 or more and 0.08 or less, and may even more preferably be 0.0005 or more and 0.07 or less.
w may be 0.001 or more and 0.10 or less, may preferably be 0.001 or more and 0.09 or less, may more preferably be 0.001 or more and 0.08 or less, and may even more preferably be 0.001 or more and 0.07 or less.

It is preferable that w satisfy 0≤w≤0.07.

### (Regarding y+z+w)

In order to obtain an all-solid-state lithium-ion battery having a large battery capacity, in Composition Formula (A), y+z+w is preferably 0.50 or less, more preferably 0.48 or less, and still more preferably 0.46 or less

In Composition Formula (A), y+z+w is more than 0, preferably 0.001 or more, and more preferably 0.002 or more.

The upper limit values and the lower limit values of y+z+w can be arbitrarily combined. y+z+w is preferably more than 0 and 0.50 or less, more preferably 0.001 or more and 0.48 or less, and still more preferably 0.002 or more and 0.46 or less.

It is preferable that 1-y-z-w≥0.50 and y≤0.30 be satisfied in Composition Formula (A). That is, the lithium metal composite oxide contained in the positive electrode active material preferably has a Ni content molar ratio of 0.50 or more and a Co content molar ratio of 0.30 or less in Composition Formula (A).

### (Regarding M)

M represents at least one element selected from the group consisting of Ti, Al, W, B, Mo, Nb, Zn, Sn, Zr, Ga, La and V.

In addition, in order to obtain an all-solid-state lithium-ion battery having excellent cycle characteristics, M in Composition Formula (A) is preferably at least one element selected from the group consisting of Ti, Al, Nb, W, B, and Zr, and more preferably at least one element selected from the group consisting of Al, Nb, and Zr. In addition, in order to obtain an all-solid-state lithium-ion battery having high thermal stability, M is preferably at least one element selected from the group consisting of Ti, Al, Nb, W, B, and Zr.

As an example of a preferable combination of the above x, y, z, and w, an example in which x is 0.02 or more and 0.30 or less, y is 0.05 or more and 0.30 or less, z is 0.02 or more and 0.35 or less, and w is 0 or more and 0.07 or less, and an example in which x is more than 0 and 0.10 or less, y is more than 0 and 0.30 or less, z is 0 or more and 0.35 or less, w is 0 or more and 0.07 or less, and z+w is more than 0 is an exemplary example.

### <Composition analysis>

The composition analysis of the particles in the positive electrode active material or the lithium metal composite oxide can be confirmed by dissolving particles of the obtained positive electrode active material in hydrochloric acid and then performing composition analysis using an inductively coupled plasma emission analysis device.

Here, the composition of the lithium metal composite oxide matches the composition in which the above composition analysis result of the positive electrode active material corresponds to Composition Formula (A). That is, the values of x, y, z, and w obtained from the analysis results of the positive electrode active material in association with Composition Formula (A) can be regarded as the values of x, y, z, and w of the lithium metal composite oxide.

As the inductively coupled plasma emission analysis device, for example, an SPS3000 (commercially available from SIINanoTechnology Inc.) can be used.

Here, the all-solid-state lithium-ion battery is charged by applying a negative potential to a positive electrode and a positive potential to a negative electrode by an external power supply.

In addition, the all-solid-state lithium-ion battery is discharged by connecting a discharge circuit to the positive electrode and the negative electrode of the charged all-solid-state lithium-ion battery and applying a current to the discharge circuit. The discharge circuit includes electronic components, electrical components and electric vehicles driven by the power of the all-solid-state lithium-ion battery.

### (Crystal structure of particles in positive electrode active material)

The particles in the positive electrode active material have a hexagonal layered crystal structure belonging to the space group R-3m.

The crystal structure of the particles in the positive electrode active material can be confirmed using powder x-ray diffraction or electronic beam diffraction.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6₁, P6₅, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

### <Method of confirming crystal structure>

The crystal structure can be confirmed by performing observation using a powder X-ray diffraction measuring device.

For powder x-ray diffraction measurement, an X-ray diffraction device can be used. As the X-ray diffraction device, for example, UltimaIV (commercially available from Rigaku Corporation) can be used.

### (Requirement 2)

In the particles, in powder x-ray diffraction measurement using CuKa rays, the crystallite size L₀₀₃ of a diffraction peak in a range of 2θ=18.7±1° is 1,300Å or less, preferably 1,290Å or less, more preferably 1,280Å or less, and particularly preferably 1,270Å or less.

The L₀₀₃ may be 100Å or more, 200Å or more, or 300Å or more.

The upper limit values and the lower limit values of L₀₀₃ can be arbitrarily combined.

Examples of combinations include an L₀₀₃ of 100Å or more and 1,290Å or less, 200Å or more and 1,280Å or less, and 300Å or more and 1,270Å or less.

### <Method of measuring L₀₀₃>

The L₀₀₃ can be measured according to powder x-ray diffraction measurement.

Powder x-ray diffraction measurement may be performed using an X-ray diffraction device. As the X-ray diffraction device, for example, UltimaIV (commercially available from Rigaku Corporation) can be used.

Specifically, first, a positive electrode active material powder containing the particles is filled into a dedicated substrate, and measurement is performed using a Cu-Kα ray source to obtain a powder x-ray diffraction pattern. An example of measurement conditions is as follows.

### (Measurement conditions)

A diffraction angle 2θ of 10° to 90°
A sampling width of 0.02°
A scan speed of 4°/min

Using integrated powder X-ray analysis software JADE (commercially available from LightStone Corporation), from the obtained powder x-ray diffraction pattern, using a tool on the software, the crystallite size L₀₀₃ of a diffraction peak in a range of 2θ=18.7±1° is obtained.

### (Requirement 3)

The positive electrode active material has a BET specific surface area of 0.2 m²/g or more and 2.0 m²/g or less.

The lower limit of the BET specific surface area is preferably 0.21 m²/g or more, more preferably 0.22 m²/g or more, and particularly preferably 0.23 m²/g or more.

The upper limit of the BET specific surface area is preferably 1.99 m²/g or less, more preferably 1.98 m²/g or less, and particularly preferably 1.97 m²/g or less.

These upper limits and lower limits of the BET specific surface area can be arbitrarily combined.

Examples of combinations include those having a BET specific surface area of 0.21 m²/g or more and 1.99 m²/g or less, 0.22 m²/g or more and 1.98 m²/g or less, and 0.23 m²/g or more and 1.97 m²/g or less.

### <Method of measuring BET specific surface area>

The BET specific surface area can be measured by the following method.

1 g of the positive electrode active material is dried in a nitrogen atmosphere at 105°C for 30 minutes, and measurement is then performed using a BET specific surface area measuring device.

As the BET specific surface area measuring device, for example, Macsorb (registered trademark, commercially available from Mountech Co., Ltd.) can be used.

The positive electrode active material preferably further satisfies the following requirements 4 to 6.

### (Requirement 4)

In the positive electrode active material, with respect to a total mass of the positive electrode active material, a sum of mass fractions of K atoms, Fe atoms, Cr atoms, Cu atoms, Ca atoms, Mg atoms, and Na atoms is 0.03% or more and 1.0% or less. In the following, K atoms, Fe atoms, Cr atoms, Cu atoms, Ca atoms, Mg atoms, and Na atoms may be referred to as "impurity atoms."

### <Method of measuring amount of impurity atoms in positive electrode active material>

The sum of mass fractions of impurity atoms is calculated as follows.

First, mass fractions of Li atoms, Ni atoms, Co atoms, Mn atoms, B atoms, Zr atoms, Al atoms, and impurity atoms contained in the positive electrode active material are analyzed and calculated using a inductively coupled plasma atomic emission spectroscopic device (ICP-AES).

Next, the sum of mass fractions of impurity atoms is calculated.

As the inductively coupled plasma atomic emission spectroscopic device, for example, an SPS3000 (commercially available from SII NanoTechnology Inc.) can be used.

The sum of mass fractions of impurity atoms is preferably 0.04% or more, more preferably 0.06% or more, and particularly preferably 0.05% or more.

The sum of mass fractions of impurity atoms is preferably 0.9% or less, more preferably 0.85% or less, and particularly preferably 0.8% or less.

The upper limit values and the lower limit values can be arbitrarily combined.

Examples of combinations include a sum of mass fractions of impurity atoms of 0.11% or more and 0.9% or less, 0.12% or more and 0.85% or less, and 0.13% or more and 0.8% or less.

The positive electrode active material having a sum of mass fractions of impurity atoms that satisfies the above lower limit value or more means that excessive crystal growth is inhibited.

A positive electrode active material in which the sum of mass fractions of impurity atoms satisfies the above upper limit value or less has a small amount of impurity atoms that can become resistance during charging and discharging and can increase the initial discharging capacity.

### (Requirement 5)

In the particles, in powder x-ray diffraction measurement using CuKa rays, a ratio (L₀₀₃/L₁₀₄) of L₀₀₃ to a crystallite size L104 of a diffraction peak in a range of 2θ=44.6±1° is preferably 0.70 or more and 3.00 or less.

The ratio (L₀₀₃/L₁₀₄) is preferably 0.70 or more, more preferably 0.80 or more, and particularly preferably 0.90 or more.

The ratio (L₀₀₃/L₁₀₄) is preferably 3.00 or less, more preferably 2.50 or less, and particularly preferably 2.00 or less.

The upper limit values and the lower limit values of the ratio (L₀₀₃/L₁₀₄) can be arbitrarily combined.

Examples of combinations include a ratio (L₀₀₃/L₁₀₄) of 0.08 or more and 2.50 or less, and 0.09 or more and 2.00 or less.

When the ratio (L₀₀₃/L₁₀₄) is within the above range, since the proportion of crystal planes that can contribute to insertion and desorption of Li in the crystallite of the positive electrode active material is high, it is possible to reduce the resistance during charging and discharging and it is possible to increase the initial discharging capacity.

### <Method of calculating ratio (L₀₀₃/L₁₀₄)>

The ratio (L₀₀₃/L₁₀₄) is calculated after L₀₀₃ and L₁₀₄ are measured according to powder x-ray diffraction measurement.

The L₁₀₄ is measured by the same method as L₀₀₃ except that a diffraction peak in a range of 2θ=44.6±1° is used, and the ratio (L₀₀₃/L₁₀₄) is calculated from the obtained value.

### (Requirement 6)

In the particles, in powder x-ray diffraction measurement using CuKa rays, a ratio (L₀₀₃/L₁₁₀) of L₀₀₃ to a crystallite size L₁₁₀ of a diffraction peak in a range of 20=64.5±1° is preferably 0.65 or more and 3.00 or less.

The ratio (L₀₀₃/L₁₁₀) is preferably 0.65 or more, more preferably 0.70 or more, and particularly preferably 0.80 or more.

The ratio (L₀₀₃/L₁₁₀) is preferably 3.00 or less, more preferably 2.50 or less, and particularly preferably 2.00 or less.

The upper limit values and the lower limit values of the ratio (L₀₀₃/L₁₁₀) can be arbitrarily combined.

Examples of combinations include a ratio (L₀₀₃/L₁₁₀) of 0.70 or more and 2.50 or less, and 0.80 or more and 2.00 or less.

When the ratio (L₀₀₃/L₁₁₀) is within the above range, the stress associated with expansion and contraction of crystal lattices of the positive electrode active material in the charging and discharging procedure is dispersed in the uniform direction. Therefore, since the particles of the positive electrode active material can be prevented from cracking during initial charging, the initial discharging capacity can increase.

### <Method of calculating ratio (L₀₀₃/L₁₁₀)>

The ratio (L₀₀₃/L₁₁₀) is calculated after L₀₀₃ and L₁₁₀ are measured according to powder x-ray diffraction measurement.

The L₁₁₀ is measured by the same method as L₀₀₃ except that a diffraction peak in a range of 2θ=64.5±1° is used, and the ratio (L₀₀₃/L₁₁₀) is calculated from the obtained value.

According to studies by the inventors, it has been found that, although a positive electrode active material exhibits battery performance such as a favorable initial discharging capacity when used for a positive electrode of a conventional liquid-based lithium-ion secondary battery, it exhibits insufficient performance when used for a positive electrode of an all-solid-state lithium-ion battery. Based on the findings specific to such an all-solid-state lithium-ion secondary battery, the inventors conducted studies and found that, even when the positive electrode active material satisfying the above requirement 1 to requirement 3 is used for a positive electrode of an all-solid-state lithium-ion battery, it is possible to increase the initial discharging capacity.

First, when the positive electrode active material satisfies the requirement 1, it can favorably insert and desorb lithium ions.

In addition, the positive electrode active material satisfies the requirements 2 and 3. In the positive electrode active material in the positive electrode of the all-solid-state lithium-ion secondary battery, lithium ions are exchanged between the positive electrode active material and the solid electrolyte.

The positive electrode active material expands during charging. If the expansion rate is large, particles crack, and a new surface will be generated. The new surface generated due to cracking of particles can become resistance when lithium ions move. In addition, the new surface is unlikely to be an interface with the solid electrolyte. Therefore, it is preferable that particle cracking be unlikely to occur when crystals expand.

In the positive electrode active material satisfying the requirement 2, the crystallite size of the particles in the positive electrode active material is small and the crystal expansion rate during initial charging is small. In this case, the particles are less likely to crack when the crystal expands. When such a positive electrode active material is used, since generation of a new surface that can become resistance is unlikely to occur, it is possible to increase the initial discharging capacity.

When a positive electrode active material satisfying the lower limit of the requirement 3 is used, it is possible to secure a sufficient contact area between the positive electrode active materials or between the positive electrode active material and the solid electrolyte. In addition, when the upper limit of the requirement 3 is satisfied, the roughness of the surface of the particles is reduced and it is possible to increase the contact area between the positive electrode active materials or between the positive electrode active material and the solid electrolyte.

For the above reasons, when the positive electrode active material satisfying the requirements 1 to 3 is used for a positive electrode of an all-solid-state lithium-ion battery, it is possible to increase the initial discharging capacity.

The battery performance of the all-solid-state lithium-ion battery can be evaluated according to the initial discharging capacity obtained by the following method.

### <Production of all-solid-state lithium-ion secondary battery>

### (Production of positive electrode active material sheet)

The positive electrode active material and Li₃BO₃ are mixed so that the composition has a ratio of positive electrode active material : Li₃BO₃ = 80:20 (molar ratio) to obtain a mixed powder. A resin binder (ethyl cellulose), a plasticizer (dioctyl phthalate), and a solvent (acetone) are added to the obtained mixed powder so that the composition has a ratio of the mixed powder:resin binder : plasticizer : solvent = 100:10:10:100 (mass ratio) and mixed using a planetary stirring/defoaming device.

The obtained slurry is defoamed using a planetary stirring/defoaming device to obtain a positive electrode mixture slurry.

The obtained positive electrode mixture slurry is applied onto a PET film using a doctor blade, and the coating film is dried to form a positive electrode film having a thickness of 50 µm.

The positive electrode film is peeled off from the PET film and punched into a circle having a diameter of 14.5 mm, and additionally pressed uniaxially at 20 MPa in the thickness direction of the positive electrode film for 1 minute to obtain a positive electrode active material sheet having a thickness of 40 µm.

### (Production of all-solid-state lithium-ion battery)

A positive electrode active material sheet and a solid electrolyte pellet of Li_{6.75} La₃Zr_{1.75}Nb_{0.25}O₁₂ (for example, commercially available from Toshima & Co., Ltd.) are laminated, and uniaxially pressed parallel to the lamination direction to obtain a laminate.

A positive electrode current collector (gold foil with a thickness of 500 µm) is additionally laminated on the positive electrode active material sheet of the obtained laminate, and heated at 300°C for 1 hour when pressurized at 100 gf, and organic components are burned. In addition, after the temperature is raised to 800°C at 5°C/min, sintering is performed at 800°C for 1 hour to obtain a laminate of a solid electrolyte layer and a positive electrode.

Next, the following operation is performed in an argon atmosphere glove box.

A negative electrode (Li foil with a thickness of 300 µm), a negative electrode current collector (stainless steel plate with a thickness of 50 µm), and a waved washer (made of stainless steel) are additionally laminated on the solid electrolyte layer in the laminate of the solid electrolyte layer and the positive electrode.

For the laminate laminated from the positive electrode to the waved washer, the positive electrode is placed on a lower lid of parts for a coin type battery R2032 (commercially available from Hohsen Corporation), it is stacked on the waved washer and covered with an upper lid, and an all-solid-state lithium-ion battery is produced by caulking with a caulking machine.

### <Measurement of initial discharging capacity>

Using the all-solid-state lithium-ion battery produced by the above method, the initial charging and discharging test is performed under the following conditions, and the initial discharging capacity is calculated.

### <Conditions of initial charging and discharging test>

Test temperature: 60°C
Constant current constant voltage charging with a maximum charging voltage of 4.3 V, a charging current of 0.01 CA, and a cutoff current of 0.002 CA
Constant current discharging with a minimum discharging voltage of 2.5 V and a discharging current of 0.01 CA

### (Other configuration 1)

In the positive electrode active material of the present embodiment, particles constituting the positive electrode active material are preferably composed of primary particles, secondary particles which are aggregates of the primary particles, and single particles that exist independently of the primary particles and the secondary particles.

### <Method of confirming particle shape>

In the present invention, "primary particles" are particles having no grain boundaries in appearance when observed using a scanning electron microscope in a field of view of 20,000x, and indicate particles having a particle diameter of less than 0.5 µm.

In the present invention, "secondary particles" are particles formed by aggregating primary particles. When secondary particles are observed using a scanning electron microscope in a field of view of 20,000x, grain boundaries are present in appearance.

In the present invention, "single particles" are particles that are present independently of secondary particles and have no grain boundaries in appearance when observed using a scanning electron microscope in a field of view of 20,000x, and indicate particles having a particle diameter of 0.5 µm or more.

That is, the positive electrode active material of the present embodiment is composed of particles having no grain boundaries in appearance and particles having grain boundaries in appearance when observed using a scanning electron microscope in a field of view of 20,000x.

Particles having no grain boundaries in appearance are composed of "primary particles" having a small particle diameter and "single particles" having a large particle diameter based on a particle diameter of 0.5 µm.

Particles having grain boundaries in appearance are "secondary particles" which are aggregates of the above "primary particles."

In the positive electrode active material of the present embodiment, the amount of single particles in all the particles is preferably 20% or more. When the positive electrode active material in which the amount of single particles in all the particles is 20% or more in terms of number percentage of particles is used in an all-solid-state battery, it is easy to secure the contact interface with the solid electrolyte in the positive electrode layer, and conduction of lithium ions is smoothly performed through the interface.

In addition, in the positive electrode active material in which the amount of single particles in all the particles is 20% or more, since there are no grain boundaries within single particles in all the particles, even if it is used in a positive electrode of an all-solid-state lithium-ion battery and charging and discharging are repeatedly performed, the particles are not easily broken and the conductive path is easily maintained.

### <Method of calculating amount of single particles>

The amount of the single particles in the positive electrode active material is calculated by the following method.

The positive electrode active material powder is observed using a scanning electron microscope at 20,000x, and the numbers of single particles and secondary particles in the observed field of view are counted. The number of single particles is N1, the number of secondary particles is N2, and the number percentage of single particles is calculated by N1/(N1+N2)[%]. Here, when the number of particles that can be observed is less than 50, a plurality of continuous fields of view are acquired and observed before 50 particles can be confirmed.

The average particle diameter of the single particles is preferably 0.5 µm or more, and more preferably 1.0 µm or more. In addition, the average particle diameter of the single particles is preferably 10 µm or less, and more preferably 5 µm or less.

The upper limit values and the lower limit values of the average particle diameter of the single particles can be arbitrarily combined.

Examples of combinations of the upper limit value and the lower limit value of the average particle diameter of the single particles include 0.5 µm or more and 10 µm or less and 1.0 µm or more and 5 µm or less.

The average particle diameter of the secondary particles is preferably 3.0 µm or more and more preferably 5.0 µm or more. In addition, the average particle diameter of the secondary particles is preferably 15 µm or less and more preferably 10 µm or less.

The upper limit values and the lower limit values of the average particle diameter of the secondary particles can be arbitrarily combined.

Examples of combinations of the upper limit value and the lower limit value of the average particle diameter of the secondary particles include 3.0 µm or more and 15 µm or less, and 5.0 µm or more and 10 µm or less.

The average particle diameter of the single particles and the secondary particles can be measured by the following method.

First, the positive electrode active material is placed on a conductive sheet attached to a sample stage. Next, using a scanning electron microscope (JSM-5510 (commercially available from JEOL Ltd.)), an electron beam having an acceleration voltage of 20 kV is emitted to the positive electrode active material, and observation is performed in a field of view of 20,000x.

Next, 50 or more and 98 or fewer single particles or secondary particles are extracted from the obtained electron microscope image (SEM image) by the following method.

### (Method of extracting single particles)

When the average particle diameter of the single particles is measured, in a field of view magnified 20,000x, all single particles included in one field of view are measurement targets. When the number of single particles included in one field of view is less than 50, single particles in a plurality of fields of view are measurement targets before the number of particles measured is 50 or more.

### (Method of extracting secondary particles)

When the average particle diameter of the secondary particles is measured, in a field of view magnified 20,000x, all secondary particles included in one field of view are measurement targets. When the number of secondary particles included in one field of view is less than 50, secondary particles in a plurality of fields of view are measurement targets before the number of particles measured is 50 or more.

For the image of the extracted single particles or secondary particles, the distance between parallel lines (diameter in the constant direction) drawn from a certain direction when interposed between the parallel lines is measured as the particle diameter of the single particles or the secondary particles.

The arithmetic mean value of the obtained particle diameters of the single particles or secondary particles is the average particle diameter of the single particles contained in the positive electrode active material or the average particle diameter of the secondary particles contained in the positive electrode active material.

### (Other configuration 2)

The positive electrode active material preferably has a coating layer composed of a metal composite oxide on the surface of a lithium metal composite oxide.

As the metal composite oxide constituting the coating layer, an oxide having lithium-ion conductivity is preferably used.

It is known that, even if the metal composite oxide constituting the coating layer does not have lithium-ion conductivity, if the coating layer is a very thin film (for example, 0.1 nm or more and 1.0 nm or less), the battery performance is improved as compared with the positive electrode active material having no coating layer. In this case, it is speculated that lithium-ion conductivity is exhibited in the coating layer. However, a production method of forming a uniform coating layer on the surface by controlling the thickness to 1.0 nm or less is a production method limited by poor mass productivity.

On the other hand, when the metal composite oxide constituting the coating layer has lithium-ion conductivity, this is preferable because the coating layer suitably conducts lithium ions, and the battery performance can be improved even if the thickness of the coating layer is about 5 nm to 20 nm.

Here, the thickness of the coating layer can be measured for a positive electrode active material having a maximum diameter of a 50% cumulative volume particle diameter D50 (µm)±5% obtained by laser diffraction type particle diameter distribution measurement. The arithmetic mean value of the values measured for 10 particles is used as the thickness of the coating layer.

For positive electrode active material particles which are measurement targets, the average thickness of the coating layer is determined from the analysis results using scanning transmission electron microscope (STEM)-energy dispersive X-ray spectroscopy (EDX). A line profile of an element specific to the coating layer is created, and based on the obtained line profile, the range in which the above specific element is detected is set as the range in which the coating layer is present, and the thickness of the coating layer can be determined.

Examples of such metal composite oxides include metal composite oxides of Li and at least one element selected from the group consisting of Nb, Ge, Si, P, Al, W, Ta, Ti, S, Zr, Zn, V and B.

When the positive electrode active material has a coating layer, it is difficult to form a high resistance layer at the interface between the positive electrode active material and the solid electrolyte, and a high output of the all-solid-state battery can be realized. Such an effect is particularly easily obtained in a sulfide-based all-solid-state battery using a sulfide-based solid electrolyte as a solid electrolyte.

### <Method of producing a positive electrode active material 1>

When the lithium metal composite oxide is produced, first, a metal composite compound containing a metal element other than Li among metal elements constituting a lithium metal composite oxide as a desired product is prepared. Then, it is preferable to calcine the metal composite compound with a lithium compound and an inactive melting agent.

Specifically, the "metal composite compound" is a compound including Ni, which is an essential metal element, and at least one optional element among Co, Mn, Fe, Cu, Ti, Mg, Al, W, B, Mo, Nb, Zn, Sn, Zr, Ga, La and V.

The metal composite compound is preferably a metal composite hydroxide or a metal composite oxide.

Hereinafter, an example of a method of producing a positive electrode active material will be described separately for a process of producing a metal composite compound and a process of producing a lithium metal composite oxide.

### (Process of producing metal composite compound)

The metal composite compound can be produced by a commonly known coprecipitation method. As the coprecipitation method, a commonly known batch type coprecipitation method or a continuous type coprecipitation method can be used. Hereinafter, a method of producing a metal composite compound will be described in detail using a metal composite hydroxide containing Ni, Co and Mn as a metal element as an example.

First, according to a coprecipitation method, and particularly, a continuous type coprecipitation method described in JP-A-2002-201028, a nickel salt solution, a cobalt salt solution, a manganese salt solution, and a complexing agent are reacted to produce a metal composite hydroxide represented by Ni(_{1-y-z})Co_{y}Mn_{z}(OH)₂ (in the formula, y+z<1).

The nickel salt which is a solute in the nickel salt solution is not particularly limited, and for example, any one or more of nickel sulfate, nickel nitrate, nickel chloride and nickel acetate can be used.

As a cobalt salt which is a solute in the cobalt salt solution, for example, any one or more of cobalt sulfate, cobalt nitrate, cobalt chloride, and cobalt acetate can be used.

As a manganese salt which is a solute in the manganese salt solution, for example, any one or more of manganese sulfate, manganese nitrate, manganese chloride, and manganese acetate can be used.

The above metal salts are used in a ratio corresponding to the composition ratio of Ni(_{1-y-z})Co_{y}Mn_{z}(OH)₂. That is, each metal salt is used in an amount in which a molar ratio of Ni in the solute in the nickel salt solution, Co in the solute in the cobalt salt solution, and Mn in the solute in the manganese salt solution is (1-y-z):y:z corresponding to the composition ratio of Ni(_{1-y-z})Co_{y}Mn_{z}(OH)₂.

In addition, the solvent for the nickel salt solution, the cobalt salt solution, and the manganese salt solution is water.

The complexing agent is a compound that allows a complex with nickel ions, cobalt ions, and manganese ions to be formed in an aqueous solution. Examples of complexing agents include ammonium ion feeders, hydrazine, ethylenediaminetetraacetic acid, nitrilotriacetic acid, uracil diacetic acid, and glycine. Examples of ammonium ion feeders include ammonium salts such as ammonium hydroxide, ammonium sulfate, ammonium chloride, ammonium carbonate, and ammonium fluoride.

In a process of producing a metal composite hydroxide, a complexing agent may or may not be used. When a complexing agent is used, the amount of the complexing agent contained in a mixed solution containing a nickel salt solution, an arbitrary metal salt solution and a complexing agent is such that, for example, the molar ratio with respect to the total number of moles of the metal salt is more than 0 and 2.0 or less.

The amount of the complexing agent contained in a mixed solution containing a nickel salt solution, a cobalt salt solution, a manganese salt solution and a complexing agent is such that, for example, the molar ratio with respect to the total number of moles of the metal salt is more than 0 and 2.0 or less.

In the coprecipitation method, in order to adjust the pH value of the mixed solution containing a nickel salt solution, an arbitrary metal salt solution and a complexing agent, an alkali metal hydroxide is added to the mixed solution before the pH of the mixed solution changes from alkaline to neutral. The alkali metal hydroxide is, for example, sodium hydroxide or potassium hydroxide.

Here, the pH value in this specification is defined as a value measured when the temperature of the mixed solution is 40°C. The pH of the mixed solution is measured when the temperature of the mixed solution sampled from the reaction chamber reaches 40°C.

When the complexing agent is continuously supplied to the reaction chamber in addition to the nickel salt solution, the cobalt salt solution, and the manganese salt solution, Ni, Co, and Mn react with each other and Ni(_{1-y-z})Co_{y}Mn_{z}(OH)₂ is generated.

In the reaction, the temperature of the reaction chamber is controlled such that it is, for example, within a range of 20°C or higher and 80°C or lower, and preferably 30°C or higher and 70°C or lower.

In addition, in the reaction, the pH value in the reaction chamber is controlled such that it is, for example, within a range of pH 9 or more and pH 13 or less, and preferably pH 11 or more and pH 13 or less.

The substances in the reaction chamber are appropriately stirred and mixed.

As the reaction chamber used in the continuous type coprecipitation method, a type of a reaction chamber in which the formed reaction precipitate is caused to overflow for separation can be used.

When a metal salt concentration, a reaction temperature, a reaction pH, calcining conditions to be described below and the like of the metal salt solution supplied to the reaction chamber are appropriately controlled, it is possible to control various physical properties of the finally obtained positive electrode active material.

In addition to controlling the above conditions, various gases, for example, inert gases such as nitrogen, argon, and carbon dioxide, oxidizing gases such as air and oxygen, or mixed gases thereof are supplied into the reaction chamber, and the oxidation state of the obtained reaction product may be controlled.

As a compound (oxidizing agent) that oxidizes the obtained reaction product, a peroxide such as hydrogen peroxide, a peroxide salt such as permanganate, perchlorate, hypochlorite, nitric acid, halogen, ozone or the like can be used.

As a compound that reduces the obtained reaction product, an organic acid such as oxalic acid or formic acid, a sulfite, hydrazine or the like can be used.

Specifically, the inside of the reaction chamber may have an inert atmosphere. When the inside of the reaction chamber has an inert atmosphere, among metals contained in the mixed solution, metals that are more easily oxidized than Ni are prevented from aggregating prior to Ni. Therefore, a uniform metal composite hydroxide can be obtained.

In addition, the inside of the reaction chamber may have an appropriate oxidizing atmosphere. The oxidizing atmosphere may be an oxygen-containing atmosphere in which an oxidizing gas is mixed with an inert gas, and when the inside of the reaction chamber in which an oxidizing agent may be present under an inert gas atmosphere has an appropriate oxidizing atmosphere, transition metals contained in the mixed solution are appropriately oxidized, and the morphology of the metal composite oxide can be easily controlled.

Oxygen and an oxidizing agent in the oxidizing atmosphere only need to have sufficient oxygen atoms to oxidize transition metals.

When the oxidizing atmosphere is an oxygen-containing atmosphere, the atmosphere in the reaction chamber can be controlled by a method such as aeration of an oxidizing gas in the reaction chamber, bubbling an oxidizing gas in the mixed solution or the like.

After the above reaction, the obtained reaction precipitate is washed with water and then dried to obtain a metal composite compound. In the present embodiment, a nickel cobalt manganese hydroxide is obtained as the metal composite compound.

In addition, when impurities derived from the mixed solution remain if the reaction precipitate is simply washed with water, as necessary, the reaction precipitate may be washed with weak acid water or an alkaline solution. Examples of alkaline solutions include an aqueous solution containing sodium hydroxide and potassium hydroxide.

When an appropriate external force is applied to the metal composite compound obtained by drying and crushing is performed to adjust the dispersed state of particles, it is possible to obtain a metal composite compound in which L₀₀₃ and the BET specific surface area can be easily controlled such that they are within a range of the present embodiment.

An "appropriate external force" is an external force to the extent at which the aggregated state is dispersed without breaking crystallites of the metal composite compound. In the present embodiment, during the above crushing, it is preferable to use a grinding machine as a crusher, and it is particularly preferable to use a millstone type grinding machine. When a millstone type grinding machine is used, it is preferable to adjust the clearance between the upper millstone and the lower millstone according to the aggregated state of the metal composite hydroxide. The clearance between the upper millstone and the lower millstone is preferably, for example, in a range of 10 µm or more and 200 µm or less.

In addition, in the above example, a nickel cobalt manganese composite hydroxide is produced, but a nickel cobalt manganese composite oxide may be prepared.

For example, a nickel cobalt manganese composite oxide can be prepared by oxidizing a nickel cobalt manganese composite hydroxide.

### (Process of producing lithium metal composite oxide)

In this process, the metal composite oxide or the metal composite hydroxide is dried and the metal composite oxide or the metal composite hydroxide is then mixed with the lithium compound.

In addition, in the present embodiment, when a metal composite oxide or a metal composite hydroxide and a lithium compound are mixed, it is preferable to mix an inactive melting agent at the same time.

When a mixture containing a metal composite oxide, a lithium compound and an inactive melting agent or a mixture containing a metal composite hydroxide, a lithium compound and an inactive melting agent is calcined, in the presence of an inactive melting agent, a mixture containing a metal composite compound and a lithium compound is calcined.

When a mixture containing a metal composite compound and a lithium compound is calcined in the presence of an inactive melting agent, secondary particles in which primary particles are sintered with each other are less likely to be generated. In addition, the growth of single particles can be promoted.

As the lithium compound, any one of lithium carbonate, lithium nitrate, lithium acetate, lithium hydroxide, lithium hydroxide, lithium oxide, lithium chloride, and lithium fluoride can be used or two or more thereof can be used in combination. Among these, either or both of lithium hydroxide and lithium carbonate are preferable.

When lithium hydroxide contains lithium carbonate as impurities, the amount of lithium carbonate in lithium hydroxide is preferably 5 mass% or less.

Drying conditions of the metal composite oxide or metal composite hydroxide are not particularly limited. The drying conditions may be, for example, any of the following conditions 1) to 3).
1) Conditions in which a metal composite oxide or a metal composite hydroxide is not oxidized or reduced. Specifically, drying conditions in which an oxide is maintained as an oxide without change and drying conditions in which a hydroxide is maintained as a hydroxide without change.
2) Conditions in which a metal composite hydroxide is oxidized. Specifically, drying conditions in which a hydroxide is oxidized to an oxide.
3) Conditions in which a metal composite oxide is reduced. Specifically, drying conditions in which an oxide is reduced to a hydroxide.

In order to set a condition in which oxidation or reduction does not occur, an inert gas such as nitrogen, helium or argon may be used in an atmosphere during drying.

In order to set a condition in which a hydroxide is oxidized, oxygen or air may be used in an atmosphere during drying.

In addition, in order to set a condition in which a metal composite oxide is reduced, a reducing agent such as hydrazine or sodium sulfite may be used under an inert gas atmosphere during drying.

After the metal composite oxide or the metal composite hydroxide is dried, classification may be appropriately performed.

The above lithium compound and metal composite compound are used in consideration of the composition ratio of the final desired product. For example, when a nickel cobalt manganese composite compound is used, the lithium compound and the metal composite compound are used in a ratio corresponding to the composition ratio of Li[Liₓ(Ni(_{1-y-z})Co_{y}Mn_{z})₁₋ₓ]O₂.

In addition, in the lithium metal composite oxide, when the amount of Li is excessive (the content molar ratio is more than 1), mixing is performed in proportions such that the molar ratio between Li contained in the lithium compound and metal elements contained in the metal composite compound is a ratio exceeding 1.

When a mixture of a nickel cobalt manganese composite compound and a lithium compound is calcined, a lithium-nickel cobalt manganese composite oxide can be obtained. Here, for calcining, dry air, an oxygen atmosphere, an inert atmosphere or the like is used according to a desired composition, and if necessary, a plurality of calcining processes are performed.

In the present embodiment, the mixture may be calcined in the presence of an inactive melting agent. When calcining is performed in the presence of an inactive melting agent, the reaction of the mixture can be promoted

The inactive melting agent may remain in the lithium metal composite oxide after calcining or may be removed by washing with water or an alcohol after calcining. It is preferable to wash the lithium metal composite oxide after calcining with water or an alcohol.

When the retention temperature in calcining is adjusted, the particle diameter of the single particles can be controlled such that it is within a preferable range of the present embodiment.

Generally, when the retention temperature is higher, the particle diameter of the single particles is larger, and the BET specific surface area tends to be small. The retention temperature in calcining may be appropriately adjusted according to the type of a transition metal element used, and the type and amount of a precipitant, and an inactive melting agent.

The retention temperature may be set in consideration of the melting point of the inactive melting agent to be described below, and is preferably in a range of [the melting point of the inactive melting agent -200°C] or higher and [the melting point of the inactive melting agent+200°C] or lower.

As the retention temperature, specifically, a range of 200°C or higher and 1,150°C or lower is an exemplary example, and the retention temperature is preferably 300°C or higher and 1,050°C or lower, and more preferably 500°C or higher and 1,000°C or lower.

In addition, the retention time at the retention temperature may be, for example, 0.1 hours or more and 20 hours or less, and is preferably 0.5 hours or more and 10 hours or less. The rate of temperature rise to the retention temperature is generally 50°C/hour or more and 400°C/hour or less, and the rate of temperature drop from the retention temperature to room temperature is generally 10°C/hour or more and 400°C/hour or less. In addition, as a calcining atmosphere, air, oxygen, nitrogen, argon or a mixed gas thereof can be used.

In addition, in order to control in a direction in which L₀₀₃ is small, the material containing impurity atoms may be added to a mixed solution (a mixed solution containing a nickel salt solution, an arbitrary metal salt solution and a complexing agent) in a process of producing a precursor (during coprecipitation synthesis), or may be added when mixed with a lithium compound.

Examples of materials containing impurity atoms include FeCO₃, CuCO₃, CrCO₃, CaCO₃, MgCO₃, Na₂CO₃, FeSO₄, CuSO₄, Cr₂(SO₄)₃, CaSO₄, MgSO₄, and Na₂SO₄.

The amount of the material containing impurity atoms added may be adjusted to be within a range of 0.01 parts by mass or more 1.00 part by mass with respect to 100 parts by mass of the metal composite oxide or the metal composite hydroxide.

The lithium metal composite oxide obtained by calcining is appropriately classified after crushing to obtain a positive electrode active material that can be applied to an all-solid-state lithium-ion battery.

The lithium metal composite oxide obtained by calcining is crushed by applying an appropriate external force, the dispersed state of particles is adjusted, and thus a positive electrode active material satisfying the requirement (2) and the requirement (3) can be obtained.

An "appropriate external force" is an external force to the extent at which the aggregated state is dispersed without breaking crystallites of the positive electrode active material. In the present embodiment, during the above crushing, it is preferable to use a grinding machine as a crusher, and it is particularly preferable to use a millstone type grinding machine. When a millstone type grinding machine is used, it is preferable to adjust the clearance between the upper millstone and the lower millstone according to the aggregated state of the lithium metal composite oxide. The clearance between the upper millstone and the lower millstone is preferably, for example, in a range of 10 µm or more and 200 µm or less.

In the present embodiment, it is preferable to use an inactive melting agent having a small amount of impurity atoms.

Specifically, the total amount of impurity atoms measured by the following method is preferably 0.001% or more and 0.050% or less.

### <Method of measuring amount of impurity atoms of inactive melting agent>

First, an inactive melting agent powder is dissolved in hydrochloric acid.

Next, using an inductively coupled plasma atomic emission spectroscopic device (ICP-AES), mass fractions of K atoms, S atoms, Fe atoms, Cr atoms, Cu atoms, Ca atoms, Mg atoms, and Na atoms contained in the inactive melting agent powder are analyzed and calculated.

Next, the sum of mass fractions of impurity atoms (K atoms, Fe atoms, Cr atoms, Cu atoms, Ca atoms, Mg atoms, and Na atoms) is calculated, and the total amount of impurity atoms is measured.

As the inductively coupled plasma atomic emission spectroscopic device, for example, an SPS3000 (commercially available from SIINanoTechnology Inc.) can be used.

When an inactive melting agent having a sum of mass fractions of impurity atoms that is equal to or larger than the above lower limit value is used, a positive electrode active material in which excessive crystal growth is inhibited is easily obtained.

When an inactive melting agent having a sum of mass fractions of impurity atoms that is equal to or less than the above upper limit value, a positive electrode active material having s small amount of impurity atoms that can become resistance during charging and discharging is easily obtained.

As an inactive melting agent having a sum of mass fractions of impurity atoms that is equal to or larger than the upper limit value, a high-purity commercial product can be used. Examples of high-purity commercial products include special grade reagents (commercially available from FUJIFILM Wako Pure Chemical Corporation).

In addition, the purity of the inactive melting agent may be increased according to recrystallization, and the sum of mass fractions of impurity atoms may be adjusted to the above upper limit value or less. Specifically, crystals containing impurities are dissolved in a solvent, and high-purity crystals are precipitated utilizing evaporation of the solvent, the difference in solubility due to the temperature difference and the change in the mixing ratio of the solvent and the like.

In the present embodiment, it is preferable to use commercial products of a high-purity inactive melting agent.

The inactive melting agent is not particularly limited as long as it does not easily react with the mixture during calcining. In the present embodiment, one or more selected from the group consisting of fluorides of at least one element (hereinafter referred to as "A") selected from the group consisting of Na, K, Rb, Cs, Ca, Mg, Sr and Ba, chlorides of A, carbonates of A, sulfates of A, nitrates of A, phosphates of A, hydroxides of A, molybdates of A and tungstates of A is an exemplary example.

Examples of fluorides of A include NaF (melting point: 993°C), KF (melting point: 858°C), RbF (melting point: 795°C), CsF (melting point: 682°C), CaF₂ (melting point: 1,402°C), MgF₂ (melting point: 1,263°C), SrF₂ (melting point: 1,473°C) and BaF₂ (melting point: 1,355°C).

Examples of chlorides of A include NaCl (melting point: 801°C), KCl (melting point: 770°C), RbCl (melting point: 718°C), CsCl (melting point: 645°C), CaCl₂ (melting point: 782°C), MgCl₂ (melting point: 714°C), SrCl₂ (melting point: 857°C) and BaCl₂ (melting point: 963°C).

Examples of carbonates of A include Na₂CO₃ (melting point: 854°C), K₂CO₃ (melting point: 899°C), Rb₂CO₃ (melting point: 837°C), Cs₂CO₃ (melting point: 793°C), CaCO₃ (melting point: 825°C), MgCO₃ (melting point: 990°C), SrCO₃ (melting point: 1,497°C) and BaCO₃ (melting point: 1,380°C).

Examples of sulfates of A include Na₂SO₄ (melting point: 884°C), K₂SO₄ (melting point: 1,069°C), Rb₂SO₄ (melting point: 1,066°C), Cs₂SO₄ (melting point: 1,005°C), CaSO₄ (melting point: 1,460°C), MgSO₄ (melting point: 1,137°C), SrSO₄ (melting point: 1,605°C) and BaSO₄ (melting point: 1,580°C).

Examples of nitrates of A, phosphates of A, hydroxides of A, molybdates of A and tungstates of A include compounds described in JP6734491B.

In the present embodiment, two or more types of these inactive melting agents can be used. When two or more types are used, the melting point of all of the inactive melting agents may decrease.

In addition, among these inactive melting agents, at least one salt selected from the group consisting of carbonates of A, sulfates of A and chlorides of A is preferable as an inactive melting agent for obtaining a lithium metal composite oxide with higher crystallinity.

In addition, A is preferably either or both of Na and K.

That is, among the above inactive melting agents, particularly preferably, an inactive melting agent is preferably at least one selected from the group consisting of NaCl, KCl, Na₂CO₃,K₂CO₃, Na₂SO₄, and K₂SO₄, and it is more preferable to use either or both of K₂SO₄ and Na₂SO₄.

The abundance of the inactive melting agent during calcining may be appropriately selected. As an example, the abundance of the inactive melting agent during calcining with respect to 100 parts by mass of the lithium compound is preferably 0.1 parts by mass or more and more preferably 1 part by mass or more.

In addition, when the crystal growth is arbitrarily promoted, an inactive melting agent other than the above exemplified inactive melting agents may be used in combination. Examples of such inactive melting agents include ammonium salts such as NH₄Cl and NH₄F.

### (Process of forming coating layer)

When a coating layer is formed on the surface of a lithium metal composite oxide, first, a coating material raw material and a lithium metal composite oxide are mixed. Next, as necessary, a heat treatment is performed, and thus a coating layer composed of a metal composite oxide can be formed on the surface of lithium metal composite oxide particles.

As the method of forming a coating layer and the coating material raw material in the present embodiment, methods and coating material raw materials described in JP673441B can be applied.

Particles in which a coating layer is formed on the surface of a lithium metal composite oxide are appropriately crushed and classified to form a positive electrode active material for an all-solid-state lithium-ion battery.

### <Method of producing a positive electrode active material 2>

When the positive electrode active material of the present embodiment contains single particles and secondary particles, a positive electrode active material can be produced from the above method of producing a positive electrode active material 1 by performing the following change.

### (Process of producing metal composite compound)

In the method of producing a positive electrode active material 2, in the process of producing a metal composite compound, a metal composite compound that finally forms single particles and a metal composite compound that forms secondary particles are produced. Hereinafter, the metal composite compound that finally forms single particles may be referred to as a "single particle precursor." In addition, the metal composite compound that finally forms secondary particles may be referred to as a "secondary particle precursor."

In the method of producing a positive electrode active material 2, when a metal composite compound is produced by the above coprecipitation method, a first coprecipitation chamber for producing a single particle precursor and a second coprecipitation chamber for forming a secondary particle precursor are used.

A single particle precursor can be produced by appropriately controlling the concentration of the metal salt supplied into the first coprecipitation chamber, the stirring speed, the reaction temperature, the reaction pH, calcining conditions to be described below, and the like.

Specifically, the temperature of the reaction chamber is preferably, for example, 30°C or higher and 80°C or lower, and more preferably controlled such that it is within a range of 40°C or higher and 70°C or lower, and still more preferably within a range of ±20°C with respect to a second reaction chamber to be described below. In addition, the pH value in the reaction chamber is, for example, preferably pH 10 or more and pH 13 or less, more preferably controlled such that it is within a range of pH 11 or more and pH 12.5 or less, still more preferably within a range of ±pH 2 or less with respect to a second reaction chamber to be described below, and particularly preferably a pH higher than that of the second reaction chamber.

In addition, a secondary particle precursor can be produced by appropriately controlling the concentration of a metal salt supplied to the second coprecipitation chamber, the stirring speed, the reaction temperature, the reaction pH, calcining conditions to be described below, and the like.

Specifically, the temperature of the reaction chamber is, for example, preferably 20°C or higher and 80°C or lower, more preferably controlled such that it is within a range of 30°C or higher and 70°C or lower, and still more preferably within a range of ±20°C with respect to a second reaction chamber to be described below. In addition, the pH value in the reaction chamber is, for example, preferably pH 10 or more and pH 13 or less, more preferably controlled such that it is within a range of pH 11 or more and pH 12.5 or less, still more preferably within a range of ±pH 2 or less with respect to a second reaction chamber to be described below, and particularly preferably a pH lower than that of the second reaction chamber.

The reaction products obtained in this manner are washed with water and then dried to isolate the nickel cobalt manganese composite hydroxide. The nickel cobalt manganese composite hydroxide to be isolated contains a single particle precursor and a secondary particle precursor.

In addition, in the above example, a nickel cobalt manganese composite hydroxide is produced, but a nickel cobalt manganese composite oxide may be prepared. For example, a nickel cobalt manganese composite oxide can be prepared by calcining a nickel cobalt manganese composite hydroxide. For calcining conditions of the nickel cobalt manganese composite hydroxide, the above conditions can be used.

### (Process of producing lithium metal composite oxide)

In the process of producing a lithium metal composite oxide, the metal composite oxide or metal composite hydroxide as the single particle precursor and the secondary particle precursor obtained in the above process is dried and then mixed with a lithium compound. The single particle precursor and the secondary particle precursor may be appropriately classified after drying.

The abundance ratio of the obtained single particles and secondary particles can be roughly controlled by mixing the single particle precursor and the secondary particle precursor at a predetermined mass ratio during mixing.

Here, in the process after mixing, the single particle precursor and the secondary particle precursor are aggregated or separated, and secondary particles produced by aggregation of the single particle precursors and single particles produced by separation of the secondary particle precursors can also exist. When the mixing ratio between the single particle precursor and the secondary particle precursor, and conditions of the process after mixing are adjusted, it is possible to control the abundance ratio between the single particles and the secondary particles in the finally obtained positive electrode active material.

When the retention temperature in calcining is adjusted, the average particle diameter of the single particles and the average particle diameter of the secondary particles of the obtained positive electrode active material can be controlled such that they are within a preferable range of the present embodiment.

<Method of producing a positive electrode active material 3>

In addition, when the positive electrode active material of the present embodiment contains single particles and secondary particles, according to the above method of producing a positive electrode active material 1, a first positive electrode active material composed of single particles and a second positive electrode active material composed of secondary particles are produced, and the first positive electrode active material and the second positive electrode active material can be mixed for production.

In the method of producing a positive electrode active material 3, in the process of producing a lithium metal composite oxide, the retention temperature when the first lithium metal composite oxide contained in the positive electrode active material is calcined may be higher than the retention temperature when the second lithium metal composite oxide contained in the positive electrode active material is calcined. Specifically, when the first lithium metal composite oxide contained in the positive electrode active material is produced, the retention temperature is preferably 30°C or higher, more preferably 50°C or higher, and still more preferably 80°C or higher than the retention temperature of the second lithium metal composite oxide contained in the positive electrode active material.

When the obtained first positive electrode active material and second positive electrode active material are mixed at a predetermined ratio, a positive electrode active material containing single particles and secondary particles can be obtained.

### <All-solid-state lithium-ion battery>

Next, while explaining the configuration of the all-solid-state lithium-ion battery, a positive electrode in which the positive electrode active material of the all-solid-state lithium-ion battery according to one aspect of the present invention is used as a positive electrode active material of an all-solid-state lithium-ion battery, and an all-solid-state lithium-ion battery including the positive electrode will be described. The all-solid-state lithium-ion battery of the present embodiment is a secondary battery.

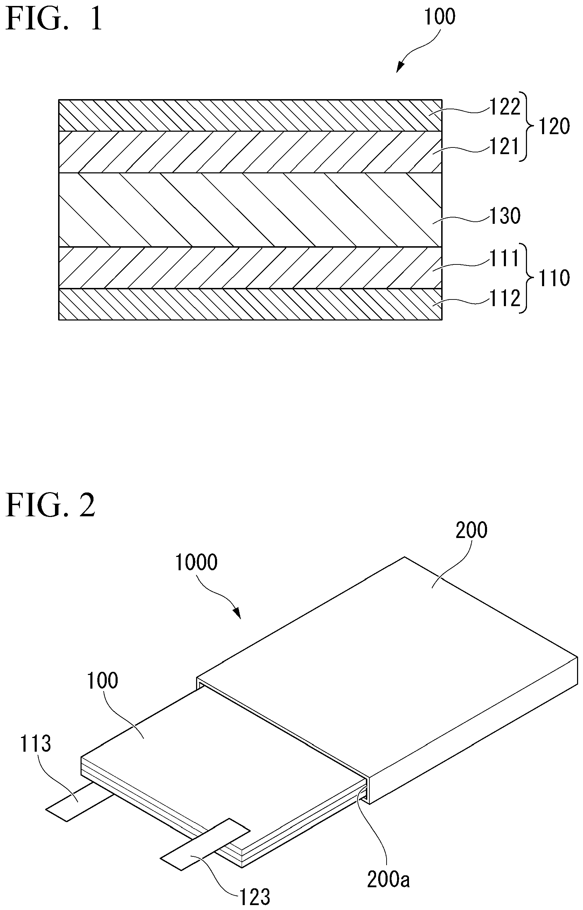

Figs. 1 and 2 are a schematic view showing an example of an all-solid-state lithium-ion battery of the present embodiment. Fig. 1 is a schematic view showing a laminate included in the all-solid-state lithium-ion battery of the present embodiment. Fig. 2 is a schematic view showing an overall structure of the all-solid-state lithium-ion battery of the present embodiment.

An all-solid-state lithium-ion battery 1000 includes a positive electrode 110, a negative electrode 120, a laminate 100 having a solid electrolyte layer 130, and an exterior body 200 in which the laminate 100 is accommodated.

Materials that form respective members will be described below.

The laminate 100 may include an external terminal 113 connected to a positive electrode current collector 112 and an external terminal 123 connected to a negative electrode current collector 122.

In the laminate 100, the solid electrolyte layer 130 is interposed between the positive electrode 110 and the negative electrode 120 so that short-circuiting is not caused. In addition, the all-solid-state lithium-ion battery 1000 includes a separator used in a conventional liquid-based lithium-ion secondary battery between the positive electrode 110 and the negative electrode 120 to prevent short circuiting between the positive electrode 110 and the negative electrode 120.

The all-solid-state lithium-ion battery 1000 includes an insulator (not shown) that insulates the laminate 100 and the exterior body 200, and a sealant (not shown) that seals an opening 200a of the exterior body 200.

As the exterior body 200, a container molded of a metal material having high corrosion resistance such as aluminum, stainless steel, or nickel-plated steel can be used. In addition, a container in which a laminate film of which at least one surface is subjected to a corrosion resistant treatment is processed into a bag shape can be used.

Examples of shapes of the all-solid-state lithium-ion battery 1000 include shapes such as a coin shape, a button shape, a paper shape (or sheet shape), a cylindrical shape, and a square shape.

In the drawing, the all-solid-state lithium-ion battery 1000 has one laminate 100, but the present invention is not limited thereto. The all-solid-state lithium-ion battery 1000 may have a configuration in which the laminate 100 is used as a unit cell, and a plurality of unit cells (the laminate 100) are enclosed inside the exterior body 200.

Hereinafter, respective components will be described in order.

### (Positive electrode)

The positive electrode 110 has a positive electrode active material layer 111 and the positive electrode current collector 112.

The positive electrode active material layer 111 contains the positive electrode active material, which is one aspect of the present invention described above. In addition, the positive electrode active material layer 111 may contain a solid electrolyte (second solid electrolyte), a conductive material, and a binder.

The positive electrode active material contained in the positive electrode active material layer 111 is in contact with the second solid electrolyte contained in the positive electrode active material layer 111. Specifically, the positive electrode active material layer 111 contains a plurality of particles containing crystals of a lithium metal composite oxide (positive electrode active material), and a solid electrolyte that is filled between the plurality of particles (positive electrode active material) and in contact with the particles (positive electrode active material).

### (Solid electrolyte)

As the solid electrolyte that the positive electrode active material layer 111 may contain, a solid electrolyte having lithium-ion conductivity and used in a known all-solid-state battery can be used. Examples of such a solid electrolyte include an inorganic electrolyte and an organic electrolyte. Examples of inorganic electrolytes include an oxide-based solid electrolyte, a sulfide-based solid electrolyte, and a hydride-based solid electrolyte. Examples of organic electrolytes include a polymer-based solid electrolyte.

In the present embodiment, it is preferable to use an oxide-based solid electrolyte or a sulfide-based solid electrolyte and it is more preferable to use an oxide-based solid electrolyte.

### (Oxide-based solid electrolyte)

Examples of oxide-based solid electrolytes include a perovskite-type oxide, a NASICON-type oxide, a LISICON-type oxide, and a garnet-type oxide.

Examples of perovskite-type oxides include Li-La-Ti-based oxides such as LiₐLa₁₋ₐTiO₃ (0<a<1), Li-La-Ta-based oxides such as Li_{b}La_{1-b}TaO₃ (0<b<1), and Li-La-Nb-based oxides such as Li_{c}La_{1-c}NbO₃ (0<c<1).

Examples of NASICON-type oxides include Li_{1+d}Al_{d}Ti_{2-d}(PO₄)₃ (0≤d≤1). The NASICON-type oxide is an oxide represented by LiₘM¹ₙM²ₒPₚO_{q}.

In the formula, M¹ is at least one element selected from the group consisting of B, Al, Ga, In, C, Si, Ge, Sn, Sb and Se.

In the formula, M² is at least one element selected from the group consisting of Ti, Zr, Ge, In, Ga, Sn and Al.

In the formula, m, n, o, p and q are an arbitrary positive number.

Examples of LISICON-type oxides include an oxide represented by Li₄M³O₄-Li₃M⁴O₄.

In the formula, M³ is at least one element selected from the group consisting of Si, Ge, and Ti.

In the formula, M⁴ is at least one element selected from the group consisting of P, As and V.

Examples of garnet-type oxides include Li-La-Zr-based oxides such as Li₇La₃Zr₂O₁₂ (LLZ).

The oxide-based solid electrolyte may be a crystalline material and may be an amorphous material. Examples of amorphous solid electrolytes include Li-B-O compounds such as Li₃BO₃, Li₂B₄O₇, and LiBO₂. The oxide-based solid electrolyte preferably contains an amorphous material.

### (Sulfide-based solid electrolyte)

Examples of sulfide-based solid electrolytes include Li₂S-P₂S₅-based compounds, Li₂S-SiS₂-based compounds, Li₂S-GeS₂-based compounds, Li₂S-B₂S₃-based compounds, Li₂S-P₂S₃-based compounds, LiI-Si₂S-P₂S₅-based compounds, LiI-Li₂S-P₂O₅-based compounds, LiI-Li₃PO₄-P₂S₅-based compounds, and Li₁₀GeP₂S₁₂.

Here, in this specification, the expression "-based compound" referring to a sulfide-based solid electrolyte is used as a general term for solid electrolytes mainly containing raw materials such as "Li₂S" and "P₂S₅" mentioned before "-based compound." For example, the Li₂S-P₂S₅-based compound contains a solid electrolyte containing Li₂S and P₂S₅, and further containing other raw materials. In addition, the Li₂S-P₂S₅-based compound also includes solid electrolytes having different mixing ratios of Li₂S and P₂S₅.

Examples of Li₂S-P₂S₅-based compounds include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, and Li₂S-P₂S₅-ZₘSₙ (m and n are a positive number, and Z indicates Ge, Zn or Ga).

Examples of Li₂S-SiS₂-based compounds include Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-Li₃PO₄, Li₂S-SiS₂-Li₂SO₄, and Li₂S-SiS₂-LiₓMO_{y} (x and y are a positive number, and M indicates P, Si, Ge, B, Al, Ga or In).

Examples of Li₂S-GeS₂-based compounds include Li₂S-GeS₂ and Li₂S-GeS₂-P₂S₅.

The sulfide-based solid electrolyte may be a crystalline material and may be an amorphous material. The sulfide-based solid electrolyte preferably contains an amorphous material.

### (Hydride-based solid electrolyte)

Examples of hydride-based solid electrolyte materials include LiBH₄, LiBH₄-3KI, LiBH₄-PI₂, LiBH₄-P₂S₅, LiBH₄-LiNH₂, 3LiBH₄-LiI, LiNH₂, Li₂AlH₆, Li(NH₂)₂I, Li₂NH, LiGd(BH₄)₃Cl, Li₂(BH₄)(NH₂), Li₃(NH₂)I, and Li₄(BH₄)(NH₂)₃.

Examples of polymer-based solid electrolytes include organic polymer electrolyte such as polyethylene oxide-based polymer compounds and polymer compounds containing at least one selected from the group consisting of polyorganosiloxane chains and polyoxyalkylene chains.

In addition, a so-called gel-type electrolyte in which a non-aqueous electrolytic solution is retained in a polymer compound can be used. Unlike the non-aqueous electrolytic solution of the conventional liquid-based lithium-ion secondary battery, the non-aqueous electrolytic solution of the gel-type polymer-based solid electrolyte loses its fluidity and exhibits a higher rigidity than the electrolytic solution. The rigidity of the electrolytic solution used in the liquid-based lithium-ion secondary battery is zero. In this regard, the lithium-ion secondary battery using the gel-type polymer-based solid electrolyte is different from the conventional liquid-based lithium-ion secondary battery and corresponds to the all-solid-state lithium-ion battery of the present invention.

In the gel-type polymer-based solid electrolyte, the proportion of the polymer compound contained in the solid electrolyte layer is preferably 1 mass% or more and 50 mass% or less.

Two or more types of solid electrolytes can be used in combination as long as the effects of the invention are not impaired.

### (Conductive material)

As the conductive material that the positive electrode active material layer 111 of the present embodiment may contain, a carbon material or a metal compound can be used. Examples of carbon materials include graphite powder, carbon black (for example, acetylene black), and fibrous carbon materials. Since carbon black is fine and has a large surface area, when an appropriate amount thereof is added to the positive electrode active material layer 111, the conductivity inside the positive electrode 110 can be improved, and charging and discharging efficiency and output characteristics can be improved. On the other hand, when the amount of carbon black added is too large, the binding force between the positive electrode active material layer 111 and the positive electrode current collector 112 and the binding force inside the positive electrode active material layer 111 both decrease, which causes an increase in internal resistance. Examples of metal compounds include metals, metal alloys and metal oxides having electrical conductivity.

In the case of a carbon material, the proportion of the conductive material in the positive electrode active material layer 111 with respect to 100 parts by mass of the positive electrode active material is preferably 5 parts by mass or more and 20 parts by mass or less. When a fibrous carbon material such as graphitized carbon fibers or carbon nanotubes is used as the conductive material, the proportion thereof can be reduced.

### (Binder)

When the positive electrode active material layer 111 contains a binder, a thermoplastic resin can be used as the binder. Examples of such a thermoplastic resin include a polyimide resin, a fluororesin, a polyolefin resin, and a fiber-based resin.

Examples of fluororesins include polyvinylidene fluoride, polytetrafluoroethylene, tetrafluoroethylene·propylene hexafluoride/vinylidene fluoride-based copolymers, propylene hexafluoride/vinylidene fluoride-based copolymers, and tetrafluoroethylene/perfluorovinyl ether-based copolymers.

Hereinafter, polyvinylidene fluoride may be referred to as PVdF.

Examples of polyolefin resins include polyethylene and polypropylene.

Examples of fiber-based resins include ethyl cellulose, acetyl cellulose, and nitrocellulose.

A mixture of two or more types of these thermoplastic resins may be used. When a fluororesin and a polyolefin resin are used as the binder, the proportion of the fluororesin with respect to the entire positive electrode active material layer 111 is set to 1 mass% or more and 10 mass% or less, and the proportion of the polyolefin resin is set to 0.1 mass% or more and 2 mass% or less, the positive electrode active material layer 111 has both a high adhesive force between the positive electrode active material layer 111 and the positive electrode current collector 112 and a high bonding force inside the positive electrode active material layer 111.

The positive electrode active material layer 111 may be previously processed as a sheet-like molded article containing a positive electrode active material, and used as an "electrode" in the present invention. In addition, in the following description, such a sheet-like molded article may be referred to as a "positive electrode active material sheet." A laminate in which a current collector is laminated on the positive electrode active material sheet may be used as an electrode.

The positive electrode active material sheet may contain at least one selected from the group consisting of the above solid electrolytes, conductive materials and binders.

The positive electrode active material sheet can be obtained, for example, by preparing a slurry by mixing a positive electrode active material, a sintering additive, the above conductive material, the above binder, a plasticizer, and a solvent, applying the obtained slurry onto a carrier film, and drying it.

Examples of sintering additives include Li₃BO₃ and Al₂O₃.

As the plasticizer, for example, dioctyl phthalate can be used.

As the solvent, for example, acetone, ethanol, or N-methyl-2-pyrrolidone can be used.

When a slurry is prepared, mixing can be performed using a ball mill. Since the obtained mixture contains air bubbles mixed into during mixing in many cases, defoaming may be performed by decompression. When defoaming is performed, a part of the solvent volatilizes and concentrates, and thus the slurry becomes highly viscous.

The slurry can be applied using a known doctor blade.

As the carrier film, a PET film can be used.

The positive electrode active material sheet obtained after drying is peeled off from the carrier film, and appropriately processed into a required shape by punching and used. In addition, the positive electrode active material sheet may be appropriately uniaxially pressed in the thickness direction.

### (Positive electrode current collector)

As the positive electrode current collector 112 included in the positive electrode 110, a sheet-like member made of a metal material such as Al, Ni, stainless steel, or Au as a forming material can be used. Among these, preferably, Al is used as a forming material and processed into a thin film because it is easy to process and inexpensive.

As a method of supporting the positive electrode active material layer 111 on the positive electrode current collector 112, a method of press-molding the positive electrode active material layer 111 on the positive electrode current collector 112 is an exemplary example. For press-molding, cold pressing or hot pressing can be used.

In addition, a mixture of the positive electrode active material, the solid electrolyte, the conductive material, and the binder is made into a paste using an organic solvent to form a positive electrode mixture, the obtained positive electrode mixture is applied to at least one side of the positive electrode current collector 112 and dried, and pressing and fixing may be performed to support the positive electrode active material layer 111 on the positive electrode current collector 112.

In addition, a mixture of the positive electrode active material, the solid electrolyte, and the conductive material is made into a paste using an organic solvent to form a positive electrode mixture, the obtained positive electrode mixture is applied to at least one side of the positive electrode current collector 112 and dried, and sintering may be performed to support the positive electrode active material layer 111 on the positive electrode current collector 112.

Examples of organic solvents that can be used in the positive electrode mixture include an amine solvent, an ether solvent, a ketone solvent, an ester solvent, and an amide solvent.

Examples of amine solvents include N,N-dimethylaminopropylamine and diethylenetriamine.

Examples of ether solvents include tetrahydrofuran.

Examples of ketone solvents include methyl ethyl ketone.

Examples of ester solvents include methyl acetate.

Examples of amide solvents include dimethylacetamide and N-methyl-2-pyrrolidone. Hereinafter, N-methyl-2-pyrrolidone may be referred to as NMP

Examples of methods of applying the positive electrode mixture to the positive electrode current collector 112 include a slit die coating method, a screen coating method, a curtain coating method, a knife coating method, a gravure coating method and an electrostatic spray method.

The positive electrode 110 can be produced by the method described above.

### (Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the solid electrolyte, the conductive material, and the binder, those described above can be used.

### (Negative electrode active material)

As the negative electrode active material contained in the negative electrode active material layer 121, materials that can be doped and de-doped with lithium ions at a potential lower than that of the positive electrode 110, which are carbon materials, chalcogen compounds (oxides, sulfides, etc.), nitrides, metals or alloys, is an exemplary example.

Examples of carbon materials that can be used as the negative electrode active material include graphites such as natural graphite and artificial graphite, cokes, carbon black, pyrolytic carbons, carbon fibers and calcined organic polymer compound products.

Examples of oxides that can be used as the negative electrode active material include the followings.
- Silicon oxide represented by the formula SiOₓ (where, x is a positive real number) such as SiO₂ and SiO.
- Titanium oxide represented by the formula TiOₓ (where, x is a positive real number) such as TiO₂ and TiO.
- Vanadium oxide represented by the formula VOₓ (where, x is a positive real number) such as V₂O₅ and VO₂.
- Iron oxide represented by the formula FeOₓ (where, x is a positive real number) such as Fe₃O₄, Fe₂O₃, and FeO.
- Tin oxide represented by the formula SnOₓ (where, x is a positive real number) such as SnO₂ and SnO.
- Tungsten oxide represented by the general formula WOₓ (where, x is a positive real number) such as WO₃ and WO₂.
- Metal composite oxide containing lithium and titanium or vanadium such as Li₄Ti₅O₁₂ and LiVO₂.

Examples of sulfides that can be used as the negative electrode active material include the followings.
- Titanium sulfide represented by the formula TiSₓ (where, x is a positive real number) such as Ti₂S₃, TiS₂, and TiS.
- Vanadium sulfide represented by the formula VSₓ (where, x is a positive real number) such as V₃S₄, VS₂, and VS.
- Iron sulfide represented by the formula FeSₓ (where, x is a positive real number) such as Fe₃S₄, FeS₂, and FeS.
- Molybdenum sulfide represented by the formula MoSₓ (where, x is a positive real number) such as Mo₂S₃ and MoS₂.
- Tin sulfide represented by the formula SnSₓ (where, x is a positive real number) such as SnS₂ and SnS.
- Tungsten sulfide represented by the formula WSₓ (where, x is a positive real number) such as WS₂.

- Antimony sulfide represented by the formula SbSₓ (where, x is a positive real number) such as Sb₂S₃.
- Selenium sulfide represented by the formula SeSₓ (where, x is a positive real number) such as Se₅S₃, SeS₂, and SeS.

Examples of nitrides that can be used as the negative electrode active material include lithium-containing nitrides such as Li₃N and Li₃₋ₓAₓN (where, A is one or both of Ni and Co, and 0<x<3).

These carbon materials, oxides, sulfides, and nitrides may be used alone or two or more thereof may be used in combination. In addition, these carbon materials, oxides, sulfides, and nitrides may be crystalline or amorphous.

In addition, examples of metals that can be used as the negative electrode active material include lithium metals, silicon metals and tin metals.

Examples of alloys that can be used as the negative electrode active material include lithium alloys, silicon alloys, tin alloys, and alloys such as Cu₂Sb and La₃Ni₂Sn₇.

Examples of lithium alloys include Li-Al, Li-Ni, Li-Si, Li-Sn, and Li-Sn-Ni.

Examples of silicon alloys include Si-Zn.

Examples of tin alloys include Sn-Mn, Sn-Co, Sn-Ni, Sn-Cu, and Sn-La.

For example, these metals and alloys are mainly used as electrodes alone after being processed into a foil shape.

Among the above negative electrode active materials, a carbon material containing graphite such as natural graphite and artificial graphite as a main component is preferably used. This is because the potential of the negative electrode 120 hardly changes from the uncharged state to the fully charged state during charging (the potential flatness is favorable), the average discharging potential is low, and the capacity retention rate when charging and discharging are repeatedly performed is high (cycle characteristics are favorable).

The shape of the carbon material may be, for example, any of a flaky shape such as natural graphite, a spherical shape such as mesocarbon microbeads, a fiber shape such as graphitized carbon fibers and a fine powder aggregate.

In addition, among the above negative electrode active materials, an oxide can be suitably used because it has high thermal stability and dendrites (dendritic crystals) due to Li metal are unlikely to be generated. As the shape of the oxide, for example, a fiber shape or a fine powder aggregate is preferably used.

### (Negative electrode current collector)

As the negative electrode current collector 122 included in the negative electrode 120, a strip-like member made of a metal material such as Cu, Ni, or stainless steel as a forming material is an exemplary example. Among these, preferably, Cu is used as a forming material and processed into a thin film because it is difficult to form an alloy with lithium and it is easy to process.

As a method of supporting the negative electrode active material layer 121 on the negative electrode current collector 122, as in the case of the positive electrode 110, a method of press-molding, a method of applying a paste-like negative electrode mixture containing a negative electrode active material onto the negative electrode current collector 122, performing drying and then pressing and clamping, and a method of applying a paste-like negative electrode mixture containing a negative electrode active material onto the negative electrode current collector 122, performing drying and then sintering is an exemplary example.

### (Solid electrolyte layer)

The solid electrolyte layer 130 contains the above solid electrolyte (first solid electrolyte). When the positive electrode active material layer 111 contains a solid electrolyte, the solid electrolyte (first solid electrolyte) constituting the solid electrolyte layer 130 and the solid electrolyte (second solid electrolyte) contained in the positive electrode active material layer 111 may be the same substance. The solid electrolyte layer 130 functions as a medium for transmitting lithium ions, and also functions as a separator that separates the positive electrode 110 and the negative electrode 120 and prevents short circuiting between them.

The solid electrolyte layer 130 can be formed by depositing an inorganic solid electrolyte on the surface of the positive electrode active material layer 111 included in the above positive electrode 110 by a sputtering method.

In addition, the solid electrolyte layer 130 can be formed by applying a paste-like mixture containing a solid electrolyte to the surface of the positive electrode active material layer 111 included in the above positive electrode 110 and performing drying. After drying, press-mold is performed, additionally pressing is performed by cold isostatic pressing (CIP), and thus the solid electrolyte layer 130 may be formed.

In addition, the solid electrolyte layer 130 can be formed by forming a solid electrolyte in a pellet form in advance, laminating the solid electrolyte pellet and the above positive electrode active material sheet, and performing uniaxial pressing in the lamination direction. The positive electrode active material sheet serves as the positive electrode active material layer 111.

With respect to the obtained laminate of the positive electrode active material layer 111 and the solid electrolyte layer 130, the positive electrode current collector 112 is additionally arranged on the positive electrode active material layer 111. When uniaxial pressing performed in the lamination direction and sintering is additionally performed, the solid electrolyte layer 130 and the positive electrode 110 can be formed.

Such a positive electrode 110 is in contact with the solid electrolyte layer 130. The solid electrolyte layer 130 contains a first solid electrolyte.

The positive electrode 110 has the positive electrode active material layer 111 in contact with the solid electrolyte layer 130 and the positive electrode current collector 112 on which the positive electrode active material layer 111 is laminated. The positive electrode active material layer 111 contains a plurality of particles containing crystals of a lithium metal composite oxide (that is, positive electrode active material which is one aspect of the present invention), and a solid electrolyte (second solid electrolyte) that is filled between the plurality of particles and in contact with the particles.

The solid electrolyte and particles contained in the positive electrode active material layer 111 each are in contact with the solid electrolyte layer 130. That is, the particles contained in the positive electrode active material layer 111 are in contact with the solid electrolyte contained in the positive electrode active material layer 111 and the solid electrolyte layer 130.

Here, it is not necessary for all particles (positive electrode active material) contained in the positive electrode active material layer 111 to be in contact with the solid electrolyte contained in the positive electrode active material layer 111 and the solid electrolyte layer 130.

When the positive electrode active material contained in the positive electrode active material layer 111 comes into contact with the solid electrolyte contained in the positive electrode active material layer 111, it conducts electricity with the solid electrolyte contained in the positive electrode active material layer 111. In addition, when the positive electrode active material contained in the positive electrode active material layer 111 comes into contact with the solid electrolyte layer 130, it conducts electricity with the solid electrolyte layer 130. In addition, when the solid electrolyte contained in the positive electrode active material layer 111 comes into contact with the solid electrolyte layer 130, it conducts electricity with the solid electrolyte layer 130.

Thereby, the positive electrode active material contained in the positive electrode active material layer 111 directly or indirectly conducts electricity with the solid electrolyte layer 130.

The laminate 100 can be produced by laminating the negative electrode 120 on the solid electrolyte layer 130 provided on the positive electrode 110 as described above in a manner in which a negative electrode electrolyte layer 121 is in contact with the surface of the solid electrolyte layer 130 using a known method. Thereby, the solid electrolyte layer 130 comes into contact with the negative electrode active material layer 121 and conducts electricity.

As described above, the obtained all-solid-state lithium-ion battery 1000 in which the solid electrolyte layer 130 is brought into contact with the positive electrode 110 and the negative electrode 120 so that short circuiting is not caused between the positive electrode 110 and the negative electrode 120 is provided. The provided all-solid-state lithium-ion battery 1000 is connected to an external power supply and charged by applying a negative potential to the positive electrode 110 and a positive potential to the negative electrode 120.

In addition, the charged all-solid-state lithium-ion battery 1000 is discharged by connecting a discharge circuit to the positive electrode 110 and the negative electrode 120 and applying a current to the discharge circuit.

According to the positive electrode active material for an all-solid-state lithium-ion battery having the above configuration, it is possible to improve the initial discharging capacity.

According to the electrode having the above configuration, since the above positive electrode active material for an all-solid-state lithium-ion battery is provided, it is possible to improve the initial discharging capacity of the all-solid-state lithium-ion battery.

According to the all-solid-state lithium-ion battery having the above configuration, since the above positive electrode active material for an all-solid-state lithium-ion battery is provided, an excellent initial discharging capacity is exhibited.

While preferable embodiments of the present invention have been described above with reference to the appended drawings, the present invention is not limited to the examples. Various shapes, combinations and the like of constituent members in the above examples are examples, and various modifications can be made based on design requirements and the like without departing from the spirit and scope of the present invention.

As one aspect, the present invention also includes the following embodiments. Here, a "positive electrode active material T" to be described below indicates a "positive electrode active material which is a positive electrode active material for an all-solid-state lithium-ion battery composed of particles containing crystals of a lithium metal composite oxide, wherein the particles have a hexagonal layered crystal structure belonging to the space group R-3m and containing at least Li and a transition metal, and in powder x-**ray diffraction measurement using CuKa rays, the crystallite size L**₀₀₃ at a **diffraction peak within** a **range of 2θ=18.7±1° is 1,300Å or less, and the BET specific** surface area is 0.2 m²/g or more and 2.0 m²/**g or less."**

(2-1) A use of the positive electrode active material T for an all-solid-state lithium-ion battery.

(2-2) A use of the positive electrode active material T for a positive electrode used for an all-solid-state lithium-ion battery.

(2-3) A use of the positive electrode active material T for producing an all-solid-state lithium-ion battery.

(2-4) A use of the positive electrode active material T for producing a positive electrode used for an all-solid-state lithium-ion battery.

(2-A) A use of (2-1), (2-2), (2-3), or (2-4) for an all-solid-state lithium-ion battery containing an oxide-based solid electrolyte as a solid electrolyte.

(3-1) The positive electrode active material T that is in contact with a solid electrolyte layer.

(3-1-1) The positive electrode active material T of (3-1), wherein the solid electrolyte layer contains an oxide-based solid electrolyte.

(3-2) A positive electrode that is in contact with a solid electrolyte layer, wherein the positive electrode has a positive electrode active material layer in contact with the solid electrolyte layer and a current collector on which the positive electrode active material layer is laminated, wherein the positive electrode active material layer contains the positive electrode active material T.

(3-3) A positive electrode that is in contact with a solid electrolyte layer, wherein the positive electrode has a positive electrode active material layer in contact with the solid electrolyte layer and a current collector on which the positive electrode active material layer is laminated, wherein the positive electrode active material layer contains the positive electrode active material T and a solid electrolyte, wherein the positive electrode active material T contains a plurality of particles, and the solid electrolyte is filled between the plurality of particles and in contact with the particles.

(3-4) The positive electrode of (3-3), wherein the solid electrolytes and the particles contained in the positive electrode active material layer each are in contact with the solid electrolyte layer.

(3-A) The positive electrode of (3-2), (3-3) or (3-4), wherein the solid electrolyte layer contains an oxide-based solid electrolyte.

(3-B) The positive electrode of (3-2), (3-3), (3-4) or (3-A), wherein the solid electrolyte contained in the positive electrode active material layer is an oxide-based solid electrolyte.

(3-5)
An all-solid-state lithium-ion battery including the positive electrode active material T according to any one of (3-1) and (3-1-1) or the positive electrode according to any one of (3-2), (3-3), (3-4), (3-A) and (3-B).

(4-1)
A method of charging an all-solid-state lithium-ion battery, including providing a solid electrolyte layer in contact with a positive electrode and a negative electrode so that short-circuiting is not caused between the positive electrode and the negative electrode, and applying a negative potential to the positive electrode and a positive potential to the negative electrode by an external power supply, wherein the positive electrode contains the positive electrode active material T.

(4-2)
A method of discharging an all-solid-state lithium-ion battery, including providing a solid electrolyte layer in contact with a positive electrode and a negative electrode so that short-circuiting is not caused between the positive electrode and the negative electrode, charging an all-solid-state lithium-ion battery by applying a negative potential to the positive electrode and a positive potential to the negative electrode by an external power supply, and connecting a discharge circuit to the positive electrode and the negative electrode of the charged all-solid-state lithium-ion battery, wherein the positive electrode contains the positive electrode active material T.

(4-A) The method of charging an all-solid-state lithium-ion battery of (4-1) or the method of discharging an all-solid-state lithium-ion battery of (4-2), wherein the solid electrolyte layer contains an oxide-based solid electrolyte.

### [Examples]

Hereinafter, the present invention will be described with reference to examples, but the present invention is not limited to these examples.

### <Composition analysis of positive electrode active material>

Composition analysis of the positive electrode active material produced by the method to be described below was performed by the method described in the above <Composition analysis>. Here, the composition of the lithium metal composite oxide matches the composition in which the above composition analysis result of the positive electrode active material corresponds to Composition Formula (A). That is, the values of x, y, z, and w obtained from the analysis results of the positive electrode active material in association with Composition Formula (A) can be regarded as the values of x, y, z, and w of the lithium metal composite oxide.

### <Method of confirming particle shape>

The shape of particles contained in the positive electrode active material was confirmed by the method described in the above <Method of confirming particle shape>. When the positive electrode active material contained single particles, the content thereof was calculated by the above <Method of calculating amount of single particles>.

### <Method of confirming crystal structure>

The crystal structure was confirmed by the method described in the above

### <Method of confirming crystal structure>.

### <Measurement of L₀₀₃>

The L₀₀₃ was obtained by the method described in the above <Method of measuring L₀₀₃>.

### <Measurement of BET specific surface area>

The BET specific surface area was measured by the method described in the above <Method of measuring BET specific surface area>.

### <Measurement of amount of impurity atoms in positive electrode active material>

The amount of impurity atoms contained in the positive electrode active material was measured by the method described in the above <Method of measuring amount of impurity atoms in positive electrode active material>.

### <Measurement of amount of impurity atoms of potassium sulfate powder>

The amount of impurity atoms of the potassium sulfate powder was measured using a potassium sulfate powder as an inactive melting agent in the method described in the above <Method of measuring amount of impurity atoms of inactive melting agent>.

### <Calculation of L₀₀₃/L₁₀₄>

The L₀₀₃/L₁₀₄ was calculated by the method described in the above <Method of calculating ratio (L₀₀₃/L₁₀₄)>.

### <Calculation of L₀₀₃/L₁₁₀>

The L₀₀₃/L₁₁₀ was calculated by the method described in the above <Method of calculating ratio (L₀₀₃/L₁₁₀)>.

### <Example 1>

### (Production of positive electrode active material 1)

Water was put into the reaction chamber including a stirrer and an overflow pipe, and a sodium hydroxide aqueous solution was then added thereto, and the liquid temperature was maintained at 50°C.

A nickel sulfate aqueous solution, a cobalt sulfate aqueous solution, and a manganese sulfate aqueous solution were mixed at a ratio (atomic ratio) of Ni, Co, and Mn of 0.88:0.08:0.04 to prepare a mixed raw material liquid 1.

Next, in the reaction chamber, with stirring, the mixed raw material liquid 1 was continuously added with an ammonium sulfate aqueous solution as a complexing agent, and nitrogen gas was continuously aerated in the reaction chamber. A sodium hydroxide aqueous solution was timely added dropwise so that the pH of the solution in the reaction chamber was 12.4 (when the liquid temperature of the aqueous solution was **40°C), and thereby nickel cobalt manganese composite hydroxide particles were** obtained.

The nickel cobalt manganese composite hydroxide particles were washed and then dehydrated in a centrifuge. Then, isolation was performed and drying was **performed at 120°C to obtain a nickel cobalt manganese composite hydroxide 1.**

The nickel cobalt manganese composite hydroxide 1, a lithium hydroxide powder and the potassium sulfate powder 1 were weighed out and mixed at a ratio (molar ratio) of Li/(Ni+Co+Mn)=1.05, K₂SO₄/(LiOH+K₂SO₄)=0.1, and then calcined under an **oxygen atmosphere at 800°C for 10 hours to obtain a mixture 1 containing a lithium** metal composite oxide.

In the potassium sulfate powder 1, the sum of mass fractions of impurity atoms measured by the above method was 0.008%.

The mixture 1 and pure water (with a water temperature of 5°C) were mixed so that the proportion of the mixture 1 with respect to a total amount of the mixture 1 and the pure water was 30 mass%, and the obtained slurry was stirred for 10 minutes.

The slurry was dehydrated, and the obtained solid substance was rinsed with pure water (liquid temperature of 5°C), which was twice the mass of the mixture 1 used to prepare the slurry (rinse process). The solid substance was dehydrated again, vacuum-dried at 80°C for 15 hours, and then vacuum-dried at 150°C for 8 hours to obtain a positive electrode active material 1.

### (Evaluation of positive electrode active material 1)

When the composition of the positive electrode active material 1 was analyzed and made to correspond to Composition Formula (A), x=0.05, y=0.08, z=0.04, w=0.

As a result of SEM observation of the positive electrode active material 1, single particles were contained, and the amount of the single particles was 90% or more.

The crystal structure of the particles in the positive electrode active material 1 was a hexagonal layered crystal structure belonging to the space group R-3m. L₀₀₃ was **1,133Å, the BET specific surface area was 1.58** m²/g, the amount of impurity atoms was 0.04%, L₀₀₃/L₁₀₄ was 0.95, and L₀₀₃/L₁₁₀ was 0.97.

### <Example 2>

### (Production of positive electrode active material 2)

A nickel cobalt manganese composite hydroxide 2 was obtained in the same manner as in Example 1 except that a nickel sulfate aqueous solution, a cobalt sulfate aqueous solution, and a manganese sulfate aqueous solution were mixed at a ratio (atomic ratio) of Ni, Co, and Mn of 0.91:0.07:0.02 to prepare a mixed raw material liquid 2, and a sodium hydroxide aqueous solution was timely added dropwise so that the pH of the solution in the reaction chamber was 12.3 (when the liquid temperature of the aqueous solution was 40°C).

The nickel cobalt manganese composite hydroxide 2, a lithium hydroxide powder, and the potassium sulfate powder 1 were weighed out and mixed at a ratio (molar ratio) of Li/(Ni+Co+Mn)=1.26, K₂SO₄/(LiOH+K₂SO₄)=0.1, and then calcined **under an oxygen atmosphere at 790°C for 10 hours to obtain a mixture 2 containing a** lithium metal composite oxide.

**The mixture 2 and pure water(water temperature of 5°C) were mixed so that the** proportion of the mixture 2 with respect to a total amount of the mixture 2 and the pure water was 30 mass%, and the obtained slurry was stirred for 10 minutes.

The slurry was dehydrated, and the obtained solid substance was rinsed with **pure water (with a water temperature of 5°C), which was twice the mass** of the mixture 2 used to prepare the slurry (rinse process). The solid substance was dehydrated again and vacuum-dried at **80°C** for 15 hours, and then vacuum-dried at **150°C** for 8 hours.

The obtained powder was sieved with Turbo Screener (commercially available from Freund Turbo Co., Ltd.) to obtain a positive electrode active material 2. The operation conditions and sieving conditions of Turbo Screener are as follows.

### [Operation conditions and sieving conditions of Turbo Screener]

The obtained lithium metal composite oxide was sieved with Turbo Screener (TS125×200 type, commercially available from Freund Turbo Co., Ltd.). The operation conditions of Turbo Screener are as follows.

### (Operation conditions of Turbo Screener)

**Screen used: 45 µm m**esh, blade rotation speed: 1,800 rpm, supply speed: 50 kg/hour

### (Evaluation of positive electrode active material 2)

When the composition of the positive electrode active material 2 was analyzed and made to correspond to Composition Formula (A), x=0.02, y=0.07, z=0.02, w=0.

As a result of SEM observation of the positive electrode active material 2, single particles were contained, and the amount of the single particles was 90% or more.

The crystal structure of the particles in the positive electrode active material 2 was a hexagonal layered crystal structure belonging to the space group R-3m. L₀₀₃ was **1,238Å, the BET specific surface area was 1.18 m²**/g, the amount of impurity atoms was 0.04%, L₀₀₃/L₁₀₄ was 1.20, and L₀₀₃/L₁₁₀ was 1.27.

### <Example 3>

### (Production of positive electrode active material 3)

A precipitate containing a nickel cobalt manganese composite hydroxide was obtained in the same manner as in Example 1 except that a sodium hydroxide aqueous solution was timely added dropwise so that the pH of the solution in the reaction **chamber was 11.2 (when the liquid temperature of the aqueous solution was 40°C) and the liquid temperature was maintained at 70°C.**

The obtained precipitate was crushed with a counter jet mill (100AFG type, commercially available from Hosokawa Micron Corporation) to obtain a nickel cobalt manganese composite hydroxide 3. Operating conditions of the counter jet mill are as follows.

### (Operating conditions of counter jet mill)

Crushing pressure: 0.59 MPa, classification rotation speed: 17,000 rpm, supply speed: 2 kg/hour

A positive electrode active material 3 was obtained in the same manner as in Example 1 except that the nickel cobalt manganese composite hydroxide 3, a lithium hydroxide powder, and the potassium sulfate powder 1 were weighed out and mixed at a ratio (molar ratio) of Li/(Ni+Co+Mn)=1.20, K₂SO₄/(LiOH+K₂SO₄)=0.1.

### (Evaluation of positive electrode active material 3)

When the composition of the positive electrode active material 3 was analyzed and made to correspond to Composition Formula (A), x=0.20, y=0.08, z=0.04, w=0.

As a result of SEM observation of the positive electrode active material 3, single particles were contained, and the amount of the single particles was 90% or more.

The crystal structure of the particles in the positive electrode active material 3 was a hexagonal layered crystal structure belonging to the space group R-3m. L₀₀₃ was **1,032Å, the BET specific surface area was 1.86** m²/g, the amount of impurity atoms was 0.03%, L₀₀₃/L₁₀₄ was 1.03, and L₀₀₃/L₁₁₀ was 1.11.

### <Comparative Example 1>

### (Production of positive electrode active material 4)

Water was put into the reaction chamber including a stirrer and an overflow pipe, and a sodium hydroxide aqueous solution was then added thereto, and the liquid temperature was maintained at **50°C.**

A nickel sulfate aqueous solution, a cobalt sulfate aqueous solution, and a manganese sulfate aqueous solution were mixed at a ratio (atomic ratio) of Ni, Co and Mn of 0.55:0.20:0.25 to prepare a mixed raw material liquid 4.

Next, in the reaction chamber, with stirring, the mixed raw material liquid 4 was continuously added with an ammonium sulfate aqueous solution as a complexing agent, and nitrogen gas was continuously aerated in the reaction chamber. A sodium hydroxide aqueous solution was timely added dropwise so that the pH of the solution in the reaction chamber was 12.0 (when the liquid temperature of the aqueous solution was **40°C), and thereby nickel cobalt manganese composite hydroxide particles were** obtained.

The obtained nickel cobalt manganese composite hydroxide particles were washed and then dehydrated in a centrifuge. Then, isolation was performed and drying **was performed at 120°C to obtain a nickel cobalt manganese composite hydroxide 4.**

The nickel cobalt manganese composite hydroxide particles 4 and a lithium hydroxide powder were weighed out and mixed at a ratio (molar ratio) of Li/(Ni+Co+Mn)=1.02.

Then, calcining was performed **under an oxygen atmosphere at 650°C for 5** hours.

Additionally, calcining was performed under an **air atmosphere at 970°C for 4** hours.

Additionally, calcining was performed under an **air atmosphere at 760°C for 5** hours.

The obtained powder was sieved by an ultrasonic generating device (model: PNS35-50-S, commercially available from artech ultarasonic systems) to obtain a positive electrode active material 4. Sieving was performed by vibrating a stainless steel sieve hav**ing an opening of 45 µm and a diameter of 200 mm at an ultrasonic output** of 50 W.

### (Evaluation of positive electrode active material 4)

When the composition of the positive electrode active material 4 was analyzed and made to correspond to Composition Formula (A), x=0.05, y=0.20, z=0.25, w=0.

As a result of SEM observation of the positive electrode active material 4, primary particles and secondary particles were contained, and the amount of the single particles was 0%.

The crystal structure of the particles in the positive electrode active material 4 was a hexagonal layered crystal structure belonging to the space group R-3m. L₀₀₃ was **1,341Å, the BET specific surface area was 0.63 m²**/g**,** the amount of impurity atoms was 0.04%, L₀₀₃/L₁₀₄ was 0.94, and L₀₀₃/L₁₁₀ was 1.02.

### <Comparative Example 2>

### (Production of positive electrode active material 5)

Water was put into the reaction chamber including a stirrer and an overflow pipe, and a sodium hydroxide aqueous solution was then added thereto, and the liquid temperature was maintained at **50°C.**

A nickel sulfate aqueous solution, a cobalt sulfate aqueous solution, and a manganese sulfate aqueous solution were mixed at a ratio (atomic ratio) of Ni, Co and Mn of 0.55:0.20:0.25 to prepare a mixed raw material liquid 5.

Next, in the reaction chamber, with stirring, the mixed raw material liquid 5 was continuously added with an ammonium sulfate aqueous solution as a complexing agent. A sodium hydroxide aqueous solution was timely added dropwise so that the pH of the solution in the reaction chamber was 12.0 (when the liquid temperature of the **aqueous solution was 40°C), and thereby nickel cobalt manganese composite hydroxide** particles were obtained.

The obtained nickel cobalt manganese composite hydroxide particles were washed. Then, isolation was performed and drying was performed at 120°C to obtain a nickel cobalt manganese composite hydroxide 5.

Particles of the nickel cobalt manganese composite hydroxide 5 and a lithium hydroxide monohydrate powder were weighed out and mixed at a ratio (molar ratio) of Li/(Ni+Co+Mn)=1.05.

Then, calcining was performed under an oxygen atmosphere at 650°C for 5 hours.

Next, calcining was performed under an oxygen atmosphere at 960°C for 5 hours.

Next, calcining was performed under an oxygen atmosphere at 1,015°C for 5 hours.

In addition, calcining was performed under an air atmosphere at 400°C for 5 hours to obtain a lithium metal composite oxide.

The obtained lithium metal composite oxide was crushed with a pin mill type crusher (Impact Mill AVIS100, commercially available from Millsystem Co., Ltd.) to obtain a positive electrode active material 5. The operating conditions of the pin mill type crusher are as follows.

### (Operating conditions of pin mill type crusher)

Rotation speed: 16,000 rpm, supply speed: 8 kg/hour

### (Evaluation of positive electrode active material 5)

When the composition of the positive electrode active material 5 was analyzed and made to correspond to Composition Formula (A), x=0.03, y=0.20, z=0.25, w=0.

As a result of SEM observation of the positive electrode active material 5, single particles were contained, and the amount of the single particles was 90% or more.

The crystal structure of the particles in the positive electrode active material 5 was a hexagonal layered crystal structure belonging to the space group R-3m. L₀₀₃ was **1,437Å, the BET specific surface area was 0.41 m²**/g, the amount of impurity atoms was 0.06%, L₀₀₃/L₁₀₄ was 0.99, and L₀₀₃/L₁₁₀ was 1.02.

### <Comparative Example 3>

### (Positive electrode active material 6)

A commercial product LiCoO₂ was evaluated as the positive electrode active material E1. As the positive electrode active material 6, a commercial product LiCoO₂ (CellSeed C-5H commercially available from Nippon Chemical Industrial Co., Ltd.) was used.

### (Evaluation of positive electrode active material 6)

As a result of SEM observation of the positive electrode active material 6, single particles were contained, and the amount of the single particles was 100%.

The crystal structure of the particles in the positive electrode active material 6 was a hexagonal layered crystal structure belonging to the space group R-3m, L₀₀₃ was **1,917Å, the BET specific surface area was 0.44** m²/g, the amount of impurity atoms was 0.02%, L₀₀₃/L₁₀₄ was 0.65, and L₀₀₃/L₁₁₀ was 0.62.

### <Production of all-solid-state lithium-ion battery>

### (Production of positive electrode active material sheet)

All-solid-state lithium-ion batteries were produced using the positive electrode active material obtained by the above production method by the method described in the above <Production of all-solid-state lithium-ion secondary battery>.

### <Measurement of initial discharging capacity>

The initial discharging capacity was calculated by the method described in the above <Measurement of initial discharging capacity> using the produced all-solid-state lithium-ion battery.

### <Production of liquid-based lithium secondary battery>

### (Production of positive electrode for lithium secondary battery)

The positive electrode active material obtained by the above production method, a conductive material (acetylene black) and a binder (PVdF) were added so that the composition had a ratio of positive electrode active material : conductive material : binder=92:5:3 (mass ratio), and kneaded to prepare a paste-like positive electrode mixture. When the positive electrode mixture was prepared, NMP was used as an organic solvent.

The obtained positive electrode mixture was applied to an Al foil with a **thickness of 40 µm** as a current collector and vacuum-dried at **150°C** for 8 hours to obtain a positive electrode for a lithium secondary battery. The electrode area of the positive electrode for a lithium secondary battery was 1.65 cm².

### (Production of lithium secondary battery (coin type half cell))

**The following operation was performed in an argon atmosphere glove box.**

The positive electrode for a lithium secondary battery produced in (Production of positive electrode for lithium secondary battery) was placed on a lower lid of parts for a coin type battery R2032 (commercially available from Hohsen Corporation) with an aluminum foil surface facing downward, and a separator (polyethylene porous film) was placed thereon.

**300 µl** of an electrolytic solution was injected therein. As the electrolytic solution, a solution obtained by dissolving LiPF₆ at a ratio of 1.0 mol/l in a mixed solution containing ethylene carbonate, dimethyl carbonate and ethyl methyl carbonate at 30:35:35 (volume ratio) was used.

Next, using metal lithium as a negative electrode, the negative electrode was placed on the upper side of a laminate film separator, an upper lid was covered with a gasket, and caulking was performed with a caulking machine to produce a lithium secondary battery **(coin type half cell R2032; hereinafter may be referred to as a "half cell").**

### <Measurement of initial discharging capacity>

The initial charging and discharging test was performed using the produced half cell under the following conditions.

### <Conditions of initial charging and discharging test>

### Test temperature: 25°C

Constant current constant voltage charging with a maximum charging voltage of 4.3 V, a charging time of 6 hours, a charging current of 0.2 CA, and a cutoff current of 0.05CA

### Constant current discharging with a minimum discharging voltage of 2.5 V, a discharging time of 5 hours, and a discharging current of 0.2 CA

Table 1 shows the crystal structure, L₀₀₃, BET specific surface area, amount of impurity atoms, L₀₀₃/L₁₀₄, and L₀₀₃/L₁₁₀ of the positive electrode active materials of Examples 1 to 3 and Comparative Examples 1 to 3.

**[Table 1]**

| | Crystal structure | L₀₀₃ (Å) | BET (m²/g) | Amount of impurity atoms (%) | L₀₀₃/L₁₀₄ | L₀₀₃/L₁₁₀ (-) |
|---|---|---|---|---|---|---|
| Example 1 | R-3m, hexagonal layered crystal structure | 1,133 | 1.58 | 0.04 | 0.95 | 0.97 |
| Example 2 | R-3m, hexagonal layered crystal structure | 1,238 | 1.18 | 0.04 | 1.20 | 1.27 |
| Example 3 | R-3m, hexagonal layered crystal structure | 1,032 | 1.86 | 0.03 | 1.03 | 1.11 |
| Comparative Example 1 | R-3m, hexagonal layered crystal structure | 1,341 | 0.63 | 0.04 | 0.94 | 0.90 |
| Comparative Example 2 | R-3m, hexagonal layered crystal structure | 1,437 | 0.41 | 0.06 | 0.99 | 1.02 |
| Comparative Example 3 | R-3m, hexagonal layered crystal structure | 1,917 | 0.44 | 0.02 | 0.65 | 0.62 |

Table 2 shows the initial discharging capacities of the liquid-based lithium secondary batteries and all-solid-state lithium-ion batteries using the positive electrode active materials of Examples 1 to 3 and Comparative Examples 1 to 3.

**[Table 2]**

| | Initial discharging capacity (mAh/g) | |
|---|---|---|
| | Liquid LIB | All-solid-state LIB |
| Example 1 | 203.00 | 166.26 |
| Example 2 | 196.19 | 116.07 |
| Example 3 | 194.67 | 83.56 |
| Comparative Example 1 | 164.02 | 10.41 |
| Comparative Example 2 | 163.05 | 2.04 |
| Comparative Example 3 | 170.94 | 12.45 |

In the evaluation results, all the all-solid-state lithium-ion batteries using the positive electrode active materials of Examples 1 to 3 exhibited a high initial discharging capacity. On the other hand, the positive electrode active materials of Comparative Examples 1 to 3 had a low initial discharging capacity.

When liquid-based lithium-ion secondary batteries were produced and evaluated using positive electrode active materials of the examples and the comparative examples, as shown in Table 2, it was evaluated that all positive electrode active materials could be favorably used.

Accordingly, it has found that, even if positive electrode active materials all favorably operated in liquid-based lithium-ion secondary batteries, but if they were used in all-solid-state lithium-ion secondary batteries, a large difference occurred in the initial discharging capacity, and the positive electrode active material for an all-solid-state lithium-ion secondary battery according to the present invention exhibited a favorable initial discharging capacity.

**As described above, it has been found that the present invention is beneficial.**

### [Reference Signs List]

100 Laminate
110 Positive electrode
111 Positive electrode active material layer
112 Positive electrode current collector
113 External terminal
120 Negative electrode
121 Negative electrode electrolyte layer
122 Negative electrode current collector
123 External terminal
130 Solid electrolyte layer
200 Exterior body
200a Opening
**1000 All-solid-state lithium-ion battery**

## Claims

1. A positive electrode active material for an all-solid-state lithium-ion battery composed of particles containing crystals of a lithium metal composite oxide,
wherein the particles have a hexagonal layered crystal structure belonging to the space group R-3m and contain at least Li and a transition metal, and in powder x-ray diffraction measurement using CuKα rays, the crystallite size L₀₀₃ of a diffraction peak in a range of 2θ=18.7±1° is 1,300 Å or less, and
wherein the BET specific surface area is 0.2 m²/g or more and 2.0 m²/g or less.

2. The positive electrode active material for an all-solid-state lithium-ion battery according to claim 1, which is used for an all-solid-state lithium-ion battery containing an oxide-based solid electrolyte.

3. The positive electrode active material for an all-solid-state lithium-ion battery according to claim 1 or 2,
wherein the sum of mass fractions of K atoms, Fe atoms, Cr atoms, Cu atoms, Ca atoms, Mg atoms, and Na atoms with respect to a total mass of the positive electrode active material for an all-solid-state lithium-ion battery is 0.03% or more and 1.0% or less.

4. The positive electrode active material for an all-solid-state lithium-ion battery according to any one of claims 1 to 3,
wherein, in the particles, in the powder x-ray diffraction measurement, a ratio L₀₀₃/L₁₀₄ of L₀₀₃ to a crystallite size L₁₀₄ **of a diffraction peak in a range of 2θ=44.6±1°** is 0.70 or more and 3.00 or less.

5. The positive electrode active material for an all-solid-state lithium-ion battery according to any one of claims 1 to 4,
wherein, in the particles, in the powder x-ray diffraction measurement, a ratio L₀₀₃/L₁₁₀ of L₀₀₃ to a crystallite size L₁₁₀ **of a diffraction peak in a range of 2θ=64.5±1° is** 0.65 or more and 3.00 or less.

6. The positive electrode active material for an all-solid-state lithium-ion battery according to any one of claims 1 to 5,
wherein the transition metal is at least one element selected from the group consisting of Ni, Co, Mn, Ti, V and W.

7. The positive electrode active material for an all-solid-state lithium-ion battery according to claim 6,
wherein the lithium metal composite oxide is represented by the following Composition Formula (A):
Li[Liₓ(Ni(_{1-y-z-w)}Co_{y}Mn_{z}M_{w})₁₋ₓ]O₂ Composition Formula (A)
(where, M is at least one element selected from the group consisting of Ti, Al, W, B, Mo, Nb, Zn, Sn, Zr, Ga and V, and -0.10≤x≤0.30, 0≤y≤0.40, 0≤z≤0.40, and 0≤w≤0.10 are satisfied).

8. The positive electrode active material for an all-solid-state lithium-ion battery according to claim 7,
wherein, in Composition Formula (A), y>0 and z+w>0 are satisfied.

9. The positive electrode active material for an all-solid-state lithium-ion battery according to claim 7 or 8,
wherein, in Composition Formula (A), 1-y-z-w≥0.50 and y≤0.30 are satisfied.

10. The positive electrode active material for an all-solid-state lithium-ion battery according to any one of claims 1 to 9,
wherein the particles are composed of primary particles, secondary particles which are aggregates of the primary particles, and single particles that exist independently of the primary particles and the secondary particles, and
wherein the amount of the single particles in the particles is 20% or more.

11. An electrode comprising the positive electrode active material for an all-solid-state lithium-ion battery according to any one of claims 1 to 10.

12. The electrode according to claim 11, further comprising a solid electrolyte.

13. An all-solid-state lithium-ion battery comprising a positive electrode, a negative electrode, and a solid electrolyte layer interposed between the positive electrode and the negative electrode,
wherein the solid electrolyte layer contains a first solid electrolyte,
wherein the positive electrode has a positive electrode active material layer in contact with the solid electrolyte layer and a current collector on which the positive electrode active material layer is laminated, and
wherein the positive electrode active material layer contains the positive electrode active material for an all-solid-state lithium-ion battery according to any one of claims 1 to 10.

14. The all-solid-state lithium-ion battery according to claim 13,
wherein the positive electrode active material layer contains the positive electrode active material for an all-solid-state lithium-ion battery and a second solid electrolyte.

15. The all-solid-state lithium-ion battery according to claim 14,
wherein the first solid electrolyte and the second solid electrolyte are the same substance.

16. The all-solid-state lithium-ion battery according to any one of claims 13 to 15, wherein the first solid electrolyte has an amorphous structure.

17. The all-solid-state lithium-ion battery according to any one of claims 13 to 16, **wherein the first solid electrolyte is an oxide-based solid electrolyte.**
